(19) Europäisches Patentamt
European Patent Office
Office européen des brevets

(11) EP 4 068 039 B1

(12) EUROPEAN PATENT SPECIFICATION

(45) Date of publication and mention of the grant of the patent:
**25.03.2026 Bulletin 2026/13**

(21) Application number: **21812780.1**

(22) Date of filing: **20.05.2021**

(51) International Patent Classification (IPC):
***G05D 1/00*** *(2024.01)*

(52) Cooperative Patent Classification (CPC):
**G05D 1/021; B62D 15/025**

(86) International application number:
**PCT/CN2021/094739**

(87) International publication number:
**WO 2021/238747 (02.12.2021 Gazette 2021/48)**

# (54) METHOD AND APPARATUS FOR CONTROLLING LATERAL MOTION OF SELF-DRIVING VEHICLE, AND SELF-DRIVING VEHICLE

VERFAHREN UND VORRICHTUNG ZUR STEUERUNG DER SEITLICHEN BEWEGUNG EINES SELBSTFAHRENDEN FAHRZEUGS UND SELBSTFAHRENDES FAHRZEUG

PROCÉDÉ ET APPAREIL DE COMMANDE DE MOUVEMENT LATÉRAL DE VÉHICULE AUTONOME, ET VÉHICULE AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2020 CN 202010456541**

(43) Date of publication of application:
**05.10.2022 Bulletin 2022/40**

(73) Proprietor: **Sany Special Purpose Vehicle Co., Ltd.**
**Hunan 422000 (CN)**

(72) Inventors:
- **WEN, Bao**
  **Shaoyang, Hunan 422000 (CN)**
- **HE, Zhiguo**
  **Shaoyang, Hunan 422000 (CN)**

(74) Representative: **DREISS Patentanwälte PartG mbB**
**Friedrichstraße 6**
**70174 Stuttgart (DE)**

(56) References cited:
**CN-A- 109 683 614**
**CN-A- 109 683 614**
**CN-A- 110 568 758**
**CN-A- 110 568 758**
**CN-A- 110 979 305**
**CN-A- 111 638 712**
**CN-A- 111 638 712**
**DE-A1- 102010 033 530**
**JP-A- 2015 217 707**
**JP-A- 2020 032 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 068 039 B1

## Description

## FIELD

The present invention relates to the technical field of self-driving vehicles, specifically, to a method and an apparatus for controlling lateral motion of self-driving vehicle, and a self-driving vehicle.

## BACKGROUND

The self-driving vehicle lateral motion control calculates the desired steering command in real time according to the planned trajectory and vehicle positioning information of the upper layer, and controls the vehicle to drive along the target trajectory. At present, the optimal control parameter gain is generally obtained by solving the Riccati equation online, which requires a large calculation amount and requires more computing resources.

CN 110 568 758 A discloses a parameter adaptive transverse motion LQR control method for autonomous automobiles. The method specifically comprises the following steps: target path information, automobile position information and automobile state information needed by a transverse motion control system are collected in real time; the collected data are processed and converted; controller parameters under a current state are determined according to the acquired data information and a formulated LQR control parameter adjustment strategy based on path tracking errors and vehicle-road position relations; and the steering control quantity of the autonomous automobile is calculated according to the determined controller parameters, and is transmitted to a steering actuator, so that the steering actuator can execute the steering control quantity.

CN 109 683 614 A discloses a vehicle path control method for an unmanned mining vehicle, which comprises: obtaining state parameters of the unmanned mining vehicle in real time based on a preset driving path, calculating a driving error; constructing a virtual terrain field equation for the unmanned mining vehicle, calculating a roadway inclination angle based on the driving error, the vehicle speed, and the steering radius of the preset driving path; converting the roadway inclination angle into a vehicle wheel force; calculating a wheel turning angle control amount through a dynamics model; and superimposing the wheel turning angle control amount with a compensation turning angle to obtain a target wheel turning angle for path control of the unmanned mining vehicle.

## SUMMARY

The present invention aims to solve or improve at least one of the above-mentioned technical problems.

To this end, the first purpose of the present invention is to provide a method for controlling lateral motion of self-driving vehicle.

The second purpose of the present invention is to provide an apparatus for controlling lateral motion of self-driving vehicle.

The third purpose of the present invention is to provide a self-driving vehicle.

In order to achieve the first purpose of the present invention, the embodiments of the present invention provide a method for controlling lateral motion of a self-driving vehicle, comprising: setting control parameters of a linear quadratic controller; acquiring vehicle overall parameters; acquiring a control parameter gain, according to the control parameters and the vehicle overall parameters; acquiring a real-time control parameter gain, according to the control parameter gain; acquiring a state error feedback amount, a trajectory curvature, and a vehicle inclination angle; acquiring a control amount and a compensation amount, according to the real-time control parameter gain, the state error feedback amount, the trajectory curvature, and the vehicle inclination angle; and acquiring an expected steering wheel angle, according to the control amount and the compensation amount, and outputting the expected steering wheel angle to a steering-by-wire system.

This embodiment can realize the optimal control of the self-driving vehicle lateral motion without static error, greatly reduce the calculation amount, ensure the convergence of the optimal control gain, and consider the influence of road curvature, road inclination and the uncertainty of vehicle overall parameters, in order to achieve high reliability and high precision tracking of the desired driving trajectory.

In addition, the embodiments provided by the above-mentioned embodiments of the present invention may also have the following additional technical features.

In the above-mentioned embodiment, the step of setting control parameters of a linear quadratic controller comprises: the control parameters comprise a first weighting matrix Q and a second weighting matrix R, Q=diag[$q_1$, $q_2$, $q_3$, $q_4$], R=[r], wherein, $q_1$, $q_2$, $q_3$, $q_4$ and r are five control parameters, respectively, $q_2$, $q_4$ and r are set to fixed values, and $q_1$, $q_3$ are acquired according to the following formula:

$$q_1 = \begin{cases} q_{1\max} & V_x < V_1 \\ q_{1\max} + \dfrac{q_{1\min} - q_{1\max}}{V_2 - V_1}(V_x - V_1) & V_1 \le V_x \le V_2 \\ q_{1\min} & V_x > V_2 \end{cases}$$

$$q_3 = \begin{cases} q_{3\max} & V_x < V_1 \\ q_{3\max} + \dfrac{q_{3\min} - q_{3\max}}{V_2 - V_1}(V_x - V_1) & V_1 \le V_x \le V_2 \\ q_{3\min} & V_x > V_2 \end{cases}$$

Wherein, $q_{1max}$ is the maximum value of $q_1$, $q_{1min}$ is the minimum value of $q_1$, $q_{3max}$ is the maximum value of $q_3$, $q_{3min}$ is the minimum value of $q_3$, $V_x$ is the vehicle longitudinal speed, $V_1$ is the first speed threshold, and $V_2$ is the second speed threshold.

In this embodiment, set $q_2$, $q_4$, and r to fixed values, $q_1$, $q_3$ perform linear adjustment of the parameters according to the vehicle longitudinal speed $V_x$, that is, the weight matrix of the control parameters of the linear quadratic controller adopts the speed linear adjustment method, which can greatly reduce the amount of computation.

In any of the above-mentioned embodiments, the step of acquiring a control parameter gain, according to the control parameters and the vehicle overall parameters comprising: the control parameter gain is acquired according to the following formula:

$$A = \begin{bmatrix} 0 & 1 & 0 & 0 \\ 0 & -\dfrac{2C_f + 2C_r}{mV_x} & \dfrac{2C_f + 2C_r}{m} & -\dfrac{2C_f l_f - 2C_r l_r}{mV_x} \\ 0 & 0 & 0 & 1 \\ 0 & -\dfrac{2C_f l_f - 2C_r l_r}{I_z V_x} & \dfrac{2C_f l_f - 2C_r l_r}{I_z} & -\dfrac{2C_f l_f^2 + 2C_r l_r^2}{I_z V_x} \end{bmatrix}$$

$$B = \begin{bmatrix} 0 \\ \dfrac{2C_f}{m} \\ 0 \\ \dfrac{2C_f l_f}{I_z} \end{bmatrix}$$

$$k_{14} = [k_{14(1)},\ k_{14(2)},\ k_{14(3)},\ k_{14(4)}]$$

$$k_{14} = lqr(A, B, Q, R)$$

$$k_1 = k_{14(1)}$$

$$k_2 = k_{14(2)}$$

$$k_3 = k_{14(3)}$$

$$k_4 = k_{14(4)}$$

Wherein, m is the vehicle mass, $I_z$ is the rotary inertia of the vehicle around the vertical direction, $l_f$ is the distance from the front axle of the vehicle to the barycenter, $l_r$ is the distance from the rear axle of the vehicle to the barycenter, $C_f$ is the cornering stiffness of the front wheel, and $C_r$ is the cornering stiffness of rear wheel, $V_x$ is the vehicle longitudinal speed, $k_{14}$ is the control gain convergence matrix, $k_{14(1)}$, $k_{14(2)}$, $k_{14(3)}$, and $k_{14(4)}$ are the four elements in the control gain convergence matrix, respectively, $k_1$, $k_2$, $k_3$, and $k_4$ are four control parameter gains, respectively.

The vehicle overall parameters comprise the vehicle mass and/or the rotary inertia of the vehicle around the vertical direction and/or the distance from the front axle of the vehicle to the barycenter and/or the distance from the rear axle of the vehicle to the barycenter and/or the cornering stiffness of the front wheels and/or or the cornering stiffness of the rear wheels. According to the overall parameters of the vehicle and the controlled object model, the optimal control parameter gain $k_1$, $k_2$, $k_3$, and $k_4$ are calculated offline through the MATLAB function lqr, which greatly reduces the amount of computation compared to the online solution of the control parameter gain.

In any of the above-mentioned embodiments, the step of acquiring a real-time control parameter gain, according to the control parameter gain, comprising: taking the speed as the independent variable, and performing polynomial fitting of the control parameter gain to acquire a first polynomial; and acquiring the real-time control parameter gain, according to the first polynomial and the real-time vehicle longitudinal speed.

Based on the control parameter gain obtained offline, the calculation method of polynomial fitting is used to obtain the real-time control parameter gain, and the calculation amount is optimized.

In any of the above-mentioned embodiments, the step of acquiring a real-time control parameter gain, according to the control parameter gain, comprising: taking the speed as the independent variable, and performing the third-order polynomial fitting of the control parameter gain, and the first polynomial is obtained as:

$$\begin{cases} k_1 = a_{31}v^3 + a_{21}v^2 + a_{11}v + a_{01} \\ k_2 = a_{32}v^3 + a_{22}v^2 + a_{12}v + a_{02} \\ k_3 = a_{33}v^3 + a_{23}v^2 + a_{13}v + a_{03} \\ k_4 = a_{34}v^3 + a_{24}v^2 + a_{14}v + a_{04} \end{cases}$$

Wherein, $a_{31}$, $a_{21}$, $a_{11}$, and $a_{01}$ are the third-order polynomial coefficients of the control parameters $k_1$, $a_{32}$, $a_{22}$, $a_{12}$, and $a_{02}$ are the third-order polynomial coefficients of the control parameters $k_2$, $a_{33}$, $a_{23}$, $a_{13}$, and $a_{03}$ are the third-order polynomial coefficients of the control parameters $k_3$, $a_{34}$, $a_{24}$, $a_{14}$, and $a_{04}$ are the third-order polynomial coefficients of control parameters $k_4$, v is the speed; acquiring the real-time control parameter gain K, according to the first polynomial and the real-time vehicle longitudinal speed:

$$\begin{cases} k_1' = a_{31}V_x^3 + a_{21}V_x^2 + a_{11}V_x + a_{01} \\ k_2' = a_{32}V_x^3 + a_{22}V_x^2 + a_{12}V_x + a_{02} \\ k_3' = a_{33}V_x^3 + a_{23}V_x^2 + a_{13}V_x + a_{03} \\ k_4' = a_{34}V_x^3 + a_{24}V_x^2 + a_{14}V_x + a_{04} \end{cases}$$

$$K = [k_1', k_2', k_3', k_4']$$

Wherein, $V_x$ is the vehicle longitudinal speed.

In this embodiment, the third-order polynomial fitting is adopted, and the optimal control parameter gain is calculated in real time according to the actual speed fed back by the vehicle, which not only reduces the calculation amount of the optimal control parameter gain, but also ensures the convergence and reliability of the optimal control parameter gain.

In any of the above-mentioned embodiments, the step of acquiring state error feedback amount comprising: acquiring the state error feedback amount according to the following formula:

$$e_y = (y - y_{des})\cos(\psi_{des}) - (x - x_{des})\sin(\psi_{des})$$

$$\dot{e}_y = V_y - V_x(\psi - \psi_{des})$$

$$e_\psi = \psi - \psi_{des}$$

$$\dot{e}_{\psi} = \omega - V_x \rho$$

$$X = \begin{bmatrix} e_y \\ \dot{e}_y \\ e_{\psi} \\ \dot{e}_{\psi} \end{bmatrix}$$

Wherein, $e_y$ is the lateral position deviation, $\dot{e}_y$ is the change rate of the lateral position deviation, $e_{\psi}$ is the heading angle deviation, $\dot{e}_{\psi}$ is the change rate of the heading angle deviation, X is the state error feedback amount, $V_x$ is the vehicle longitudinal speed, $V_y$ is the vehicle lateral speed, (x, y) is the vehicle position at the current moment, ($x_{des}$, $y_{des}$) is the desired trajectory position, $\psi$ is the heading angle of the vehicle at the current moment, $\psi_{des}$ is the heading angle of the desired trajectory, ω represents the yaw velocity of the vehicle, and ρ represents the desired target point curvature.

By updating the state error and feeding it back to the control gain, the lateral control effect is more accurate.

In any of the above-mentioned embodiments, the step of acquiring a control amount and a compensation amount, according to the control parameter gain, the real-time control parameter gain, the state error, the trajectory curvature, and the vehicle inclination angle, comprising:

acquiring a feedback control amount, according to the real-time control parameter gain and the state error feedback amount is:

$$\delta_{sw_b} = -KX$$

wherein, K is the real-time control parameter gain, X is the state error feedback amount;

acquiring the position error integral control amount, according to the position error integral is:

$$\delta_{sw_i} = \delta'_{sw_i} + k_i e_y \mathrm{T}$$

wherein, $k_i$ is the integral coefficient, $e_y$ is the lateral position deviation, T is the control period, $\delta'_{sw_i}$ is the control period value of the previous beat of $\delta_{sw_i}$;

acquiring a road curvature feedforward compensation amount, according to the trajectory curvature is:

$$\delta_{sw_c} = \frac{mV_x^2}{R_{des}L}\left[\frac{l_r}{2C_f} - \frac{l_f}{2C_r} + \frac{l_f}{2C_r}k_3'\right] + \frac{L}{R_{des}} - \frac{l_r}{R_{des}}k_3'$$

wherein, m is the vehicle mass, $V_x$ is the vehicle longitudinal speed, $l_f$ is the distance from the front axle of the vehicle to the barycenter, $l_r$ is the distance from the rear axle of the vehicle to the barycenter, $C_f$ is the cornering stiffness of the front wheel, $C_r$ is the cornering stiffness of rear wheel, $R_{des}$ is the trajectory radius, L is the sum of $l_f$ and $l_r$;

acquiring a road slope feedforward compensation amount, according to the vehicle inclination angle is:

$$\delta_{sw_r} = \frac{A(4,3) - B(1,4)k3}{A(2,3)B(1,4) - A(1,4)B(1,2)} g\sin(\gamma)$$

wherein, A(i, j) is the parameter corresponding to the i-th row and the j-th column of the matrix A, B(i, j) is the parameter corresponding to the i-th row and j-th column of matrix B, g is the gravity acceleration, $\gamma$ is the vehicle inclination angle.

The specific acquisition methods of the feedback control amount, the position error integral control amount, the road curvature feedforward compensation amount, the road slope feedforward compensation amount are given by the above-mentioned formulas. In this embodiment, the road curvature provided by the desired trajectory is used to perform feedforward compensation for the road curvature, the positioning information is used to perform feedforward compensation for the road inclination, and a position deviation integral term is introduced to reduce the position error. And comprehensively consider the uncertainty influence of the road curvature, the road inclination and the vehicle overall parameters to achieve high reliability and high precision tracking of the desired driving trajectory.

In any of the above-mentioned embodiments, the step of acquiring an expected steering wheel angle, according to the control amount and the compensation amount, and outputting the expected steering wheel angle to a steering-by-wire system, comprising:
acquiring the expected steering wheel angle, according to the following formula:

$$\delta_{sw} = (\delta_{sw_b} + \delta_{sw_r} + \delta_{sw_c} + \delta_{sw_i})i$$

Wherein, $\delta_{sw_b}$ is the feedback control amount, $\delta_{sw_i}$ is the position error integral control amount, $\delta_{sw_c}$ is the road curvature feedforward compensation amount, $\delta_{sw_r}$ is the road slope feedforward compensation amount, I is the steering wheel ratio

According to the calculation results of the feedback control amount, the road curvature feedforward control amount, the road slope feedforward compensation amount, and the position integral control amount, the calculation results are summed, and then multiplied by the steering wheel ratio to obtain the final expected steering wheel angle, which is output to the steering-by- wire system, to achieve path tracking, to ensure that the steady-state error can be completely eliminated when the vehicle overall parameters are uncertain.

In order to achieve the second purpose of the present invention, embodiments of the present invention provide an apparatus for controlling lateral motion of a self-driving vehicle, comprising: a setup module; a first acquisition module; a second acquisition module; a third acquisition module; a fourth acquisition module; a fifth acquisition module; and a sixth acquisition module, wherein, the control parameters of the linear quadratic controller are set by the setup module, the first acquisition module acquires the vehicle overall parameters, the second acquisition module acquires the control parameter gain according to the control parameters and the vehicle overall parameters, the second acquisition module acquires the control parameter gain according to the control parameters and the vehicle overall parameters, the third acquisition module acquires the real-time control parameter gain according to the control parameter gain, the fourth acquisition module acquires the state error, the trajectory curvature and the vehicle inclination angle, the fifth acquisition module acquires the control amount and the compensation amount according to the control parameter gain, the real-time control parameter gain, the state error, the trajectory curvature and the vehicle inclination angle, the sixth acquisition module acquires the expected steering wheel angle according to the control amount and the compensation amount, and outputs the expected steering wheel angle to the steering-by-wire system.

This embodiment can realize the optimal control of the self-driving vehicle lateral motion without static error, greatly reduce the calculation amount, ensure the convergence of the optimal control gain, and consider the influence of road curvature, road inclination and the uncertainty of vehicle overall parameters, in order to achieve high reliability and high precision tracking of the desired driving trajectory.

In order to achieve the third purpose of the present invention, the embodiment of the present invention provides a self-driving vehicle, comprising: a vehicle body and a control device; wherein, the control device controls the running of the vehicle body using the method for controlling lateral motion of a self-driving vehicle as described in any one of the embodiments of the present invention.

The self-driving vehicle provided by embodiments of the present invention implements the steps of a method for controlling lateral motion of a self-driving vehicle as in any embodiment of the present invention. Therefore, it has all the beneficial effects of a method for controlling lateral motion of a self-driving vehicle as in any embodiment of the present invention, which will not be repeated here.

Additional aspects and advantages of the present invention will become apparent in the following description or will be learned by practice of the present invention.

## BRIEF DESCRIPTION OF THE DRAWINGS

Additional aspects and advantages of the present invention will become apparent in the following description or will be learned by practice of the present invention.

Fig. 1 is a control schematic diagram of a self-driving vehicle lateral motion of the related art;
Fig. 2 is a flow chart of a method for controlling lateral motion of a self-driving vehicle of an embodiment of the present invention;
Fig. 3 is a method flow chart of acquiring real-time control parameter gain of an embodiment of the present invention;
Fig. 4 is a method flow chart of acquiring control amount and compensation amount of an embodiment of the present invention;
Fig. 5 is a structural block diagram of an apparatus for controlling lateral motion of a self-driving vehicle of an embodiment of the present invention;
Fig. 6 is a structural block diagram of a self-driving vehicle of an embodiment of the present invention;

Fig. 7 is a control schematic diagram of a self-driving vehicle lateral motion of a specific embodiment of the present invention; and

Fig. 8 is a flow chart of a method for controlling lateral motion of a self-driving vehicle of a specific embodiment of the present invention.

The corresponding relationship between the reference signs and component names in Fig. 1 to Fig. 8 is as follows:

100: apparatus for controlling lateral motion of self-driving vehicle, 110: setup module, 120: first acquisition module, 130: second acquisition module, 140: third acquisition module, 150: fourth acquisition module, 160: fifth acquisition module, 170: sixth acquisition module, 200: self-driving vehicle, 210: vehicle body, 220: control device.

## DETAILED DESCRIPTION OF THE INVENTION

In order that the above-mentioned objectives, features and advantages of the present invention can be understood more clearly, a further detailed description of the present invention will be given below in connection with the accompanying drawings and specific embodiments. It should be noted that the embodiments of the present invention and the features in the embodiments can be combined with each other if there is no conflict.

In the following description, numerous specific details are set forth in order to provide a thorough understanding of the present invention. However, the present invention can also be implemented in other manners than those described herein. Therefore, the protection scope of the present invention is not limited to the specific embodiments disclosed below.

A method and an apparatus for controlling lateral motion of self-driving vehicle of some embodiments of the present invention are described below with reference to Fig. 1 to Fig. 8.

The self-driving vehicle lateral motion control calculates the desired steering command in real time according to the planned trajectory and vehicle positioning information of the upper layer, and controls the vehicle to drive along the target trajectory. At present, the linear quadratic optimal control (LQR) is widely used for the self-driving vehicle lateral motion control. As shown in Fig. 1, there are mainly the following problems:

(1) The optimal control gain is generally obtained by solving the Riccati equation online, which requires more computing resources and does not necessarily guarantee the convergence of the control gain.

(2) At present, most of the self-driving vehicle lateral motion control systems adopt the introduction of road curvature feedforward compensation to reduce the steady-state error, and do not consider the lateral steady-state error caused by road inclination, which reduces the quality of the vehicle lateral control system.

(3) There is a certain uncertainty in the vehicle overall parameters, and it cannot be guaranteed to completely eliminate the steady-state error of vehicle lateral control.

The related art is a parameter-adaptive lateral motion LQR control method for autonomous vehicles. The LQR control parameters adjustment strategy based on path tracking error and vehicle-road position relationship determines the controller parameters in the current state. According to the determined controller parameters, the steering control amount of the autonomous vehicle is calculated, and it is passed to the steering actuator for execution, which is different from this embodiment in that:

(1) The parameter adjustment strategies are different. This related technology uses the parameter adjustment strategy of the path tracking error and the vehicle-road position relationship, and this embodiment uses the speed parameter adjustment strategy.

(2) The calculation process of the optimal control gain is different. This related technology solves the Riccati equation online to obtain the optimal control gain. In this embodiment, the optimal control gain is calculated offline, and then polynomial fitting is used to control the gain and update it in real time.

(3) The steering wheel angle is different. This related technology only considers the state error feedback control amount. On the basis of the state error feedback control amount, this embodiment also considers the road curvature feedforward control amount, the road slope feedforward compensation amount, and the position error integral control amount.

In sum, the purpose of this embodiment is to solve at least one of the following problems:

(1) Solve the Riccati equation online to obtain the optimal control gain, which requires a large calculation amount.

(2) The lateral steady-state error caused by road inclination is not considered.

Embodiment 1

As shown in Fig. 2, this embodiment provides a method for controlling lateral motion of self-driving vehicle, comprising:

Step S102, setting control parameters of a linear quadratic controller;

Step S104, acquiring vehicle overall parameters;

Step S106, acquiring a control parameter gain, according to the control parameters and the vehicle overall parameters;

Step S108, acquiring a real-time control parameter gain, according to the control parameter gain;

Step S110, acquiring a state error feedback amount, a trajectory curvature, and a vehicle inclination angle;

Step S112, acquiring a control amount and a compensation amount, according to the real-time control parameter gain, the state error feedback amount, the trajectory curvature, and the vehicle inclination angle; and

Step S114, acquiring an expected steering wheel angle, according to the control amount and the compensation amount, and outputting the expected steering wheel angle to a steering-by-wire system.

This embodiment can realize the optimal control of the self-driving vehicle lateral motion without static error, greatly reduce the calculation amount, ensure the convergence of the optimal control gain, and consider the influence of road curvature, road inclination and the uncertainty of vehicle overall parameters, in order to achieve high reliability and high precision tracking of the desired driving trajectory.

Embodiment 2

In addition to the technical features of the above-described embodiments, this embodiment further comprises the following technical features.

In the above-mentioned embodiment, the step of setting control parameters of a linear quadratic controller comprises: the control parameters comprise a first weighting matrix Q and a second weighting matrix R, Q=diag[$q_1$, $q_2$, $q_3$, $q_4$], R=[r], wherein, $q_1$, $q_2$, $q_3$, $q_4$ and r are five control parameters, respectively, $q_2$, $q_4$ and r are set to fixed values, and $q_1$, $q_3$ are acquired according to the following formula:

$$q_1 = \begin{cases} q_{1\max} & V_x < V_1 \\ q_{1\max} + \dfrac{q_{1\min} - q_{1\max}}{V_2 - V_1}(V_x - V_1) & V_1 \le V_x \le V_2 \\ q_{1\min} & V_x > V_2 \end{cases}$$

$$q_3 = \begin{cases} q_{3\max} & V_x < V_1 \\ q_{3\max} + \dfrac{q_{3\min} - q_{3\max}}{V_2 - V_1}(V_x - V_1) & V_1 \le V_x \le V_2 \\ q_{3\min} & V_x > V_2 \end{cases}$$

Wherein, $q_{1max}$ is the maximum value of $q_1$, $q_{1min}$ is the minimum value of $q_1$, $q_{3max}$ is the maximum value of $q_3$, $q_{3min}$ is the minimum value of $q_3$, $V_x$ is the vehicle longitudinal speed, $V_1$ is the first speed threshold, and $V_2$ is the second speed threshold.

In this embodiment, set $q_2$, $q_4$, and r to fixed values, only for $q_1$, $q_3$, perform linear adjustment of the parameters

according to the vehicle longitudinal speed $V_x$, that is, the weight matrix of the control parameters of the linear quadratic controller adopts the speed linear adjustment method, which can reduce the amount of computation.

Embodiment 3

In addition to the technical features of the above-described embodiments, this embodiment further comprises the following technical features.

The step of acquiring a control parameter gain, according to the control parameters and the vehicle overall parameters comprising: the control parameter gain is acquired according to the following formula:

$$A = \begin{bmatrix} 0 & 1 & 0 & 0 \\ 0 & -\frac{2C_f + 2C_r}{mV_x} & \frac{2C_f + 2C_r}{m} & -\frac{2C_f l_f - 2C_r l_r}{mV_x} \\ 0 & 0 & 0 & 1 \\ 0 & -\frac{2C_f l_f - 2C_r l_r}{I_z V_x} & \frac{2C_f l_f - 2C_r l_r}{I_z} & -\frac{2C_f l_f^2 + 2C_r l_r^2}{I_z V_x} \end{bmatrix}$$

$$B = \begin{bmatrix} 0 \\ \frac{2C_f}{m} \\ 0 \\ \frac{2C_f l_f}{I_z} \end{bmatrix}$$

$$k_{14} = \left[k_{14(1)},\ k_{14(2)},\ k_{14(3)},\ k_{14(4)}\right]$$

$$k_{14} = lqr(A, B, Q, R)$$

$$k_1 = k_{14(1)}$$

$$k_2 = k_{14(2)}$$

$$k_3 = k_{14(3)}$$

$$k_4 = k_{14(4)}$$

Wherein, m is the vehicle mass, $I_z$ is the rotary inertia of the vehicle around the vertical direction, $l_f$ is the distance from the front axle of the vehicle to the barycenter, $l_r$ is the distance from the rear axle of the vehicle to the barycenter, $C_f$ is the cornering stiffness of the front wheel, and $C_r$ is the cornering stiffness of rear wheel, $V_x$ is the vehicle longitudinal speed, $k_{14}$ is the control gain convergence matrix, $k_{14(1)}$, $k_{14(2)}$, $k_{14(3)}$, and $k_{14(4)}$ are the four elements in the control gain convergence matrix, respectively, $k_1$, $k_2$, $k_3$, and $k_4$ are four control parameter gains, respectively. $k_{14}$ is the optimal control gain convergence matrix calculated by MATLAB, and $k_1$, $k_2$, $k_3$, and $k_4$ are the four control parameter gains, respectively.

Wherein, the vehicle overall parameters comprise the vehicle mass and/or the rotary inertia of the vehicle around the vertical direction and/or the distance from the front axle of the vehicle to the barycenter and/or the distance from the rear axle of the vehicle to the barycenter and/or the cornering stiffness of the front wheels and/or or the cornering stiffness of the rear wheels. Acquire the vehicle overall parameters, acquire the control parameter gain offline according to the vehicle overall parameters, and reduce the computational complexity of this embodiment method.

According to the overall parameters of the vehicle and the controlled object model, the optimal control parameter gain $k_1$, $k_2$, $k_3$, and $k_4$ are calculated offline through the MATLAB function lqr, which greatly reduces the amount of

computation compared to the online solution of the control parameter gain.

Embodiment 4

As shown in Fig. 3, in addition to the technical features of the above-described embodiments, this embodiment further comprises the following technical features.

The step of acquiring a real-time control parameter gain, according to the control parameter gain, comprising:

Step S202, taking the speed as the independent variable, and performing polynomial fitting of the control parameter gain to acquire a first polynomial; and

Step S204, acquiring the real-time control parameter gain, according to the first polynomial and the real-time vehicle longitudinal speed.

Based on the control parameter gain obtained offline, the calculation method of polynomial fitting is used to obtain the real-time control parameter gain, and the calculation amount is optimized.

Embodiment 5

In addition to the technical features of the above-described embodiments, this embodiment further comprises the following technical features.

The step of acquiring a real-time control parameter gain, according to the control parameter gain, comprising: taking the speed as the independent variable, and performing the third-order polynomial fitting of the control parameter gain, and the first polynomial is obtained as:

$$\begin{cases} \mathrm{k}_1 = a_{31}v^3 + a_{21}v^2 + a_{11}v + a_{01} \\ \mathrm{k}_2 = a_{32}v^3 + a_{22}v^2 + a_{12}v + a_{02} \\ \mathrm{k}_3 = a_{33}v^3 + a_{23}v^2 + a_{13}v + a_{03} \\ \mathrm{k}_4 = a_{34}v^3 + a_{24}v^2 + a_{14}v + a_{04} \end{cases}$$

Wherein, $a_{31}$, $a_{21}$, $a_{11}$, and $a_{01}$ are the third-order polynomial coefficients of the control parameters $k_1$, $a_{32}$, $a_{22}$, $a_{12}$, and $a_{02}$ are the third-order polynomial coefficients of the control parameters $k_2$, $a_{33}$, $a_{23}$, $a_{13}$, and $a_{03}$ are the third-order polynomial coefficients of the control parameters $k_3$, $a_{34}$, $a_{24}$, $a_{14}$, and $a_{04}$ are the third-order polynomial coefficients of control parameters $k_4$, v is the speed; acquiring the real-time control parameter gain K, according to the first polynomial and the real-time vehicle longitudinal speed:

$$\begin{cases} \mathrm{k}'_1 = a_{31}V_x^3 + a_{21}V_x^2 + a_{11}V_x + a_{01} \\ \mathrm{k}'_2 = a_{32}V_x^3 + a_{22}V_x^2 + a_{12}V_x + a_{02} \\ \mathrm{k}'_3 = a_{33}V_x^3 + a_{23}V_x^2 + a_{13}V_x + a_{03} \\ \mathrm{k}'_4 = a_{34}V_x^3 + a_{24}V_x^2 + a_{14}V_x + a_{04} \end{cases}$$

$$K = [k'_1, k'_2, k'_3, k'_4]$$

Wherein, $V_x$ is the vehicle longitudinal speed.

In this embodiment, the third-order polynomial fitting is adopted, and the optimal control parameter gain is calculated in real time according to the actual speed fed back by the vehicle, which not only reduces the calculation amount of the optimal control parameter gain, but also ensures the convergence and reliability of the optimal control parameter gain.

Embodiment 6

In addition to the technical features of the above-described embodiments, this embodiment further comprises the following technical features.

The step of acquiring state error feedback amount comprising:
acquiring the state error feedback amount according to the following formula:

$$e_y = (y - y_{des})\cos(\psi_{des}) - (x - x_{des})\sin(\psi_{des})$$

$$\dot{e}_y = V_y - V_x(\psi - \psi_{des})$$

$$e_\psi = \psi - \psi_{des}$$

$$\dot{e}_\psi = \omega - V_x\rho$$

$$X = \begin{bmatrix} e_y \\ \dot{e}_y \\ e_\psi \\ \dot{e}_\psi \end{bmatrix}$$

Wherein, $e_y$ is the lateral position deviation, $\dot{e}_y$ is the change rate of the lateral position deviation, $e_\psi$ is the heading angle deviation, $\dot{e}_\psi$ is the change rate of the heading angle deviation, X is the state error feedback amount, $V_x$ is the vehicle longitudinal speed, $V_y$ is the vehicle lateral speed, (*x*, y) is the vehicle position at the current moment, ($x_{des}$, $y_{des}$) is the desired trajectory position, $\psi$ is the heading angle of the vehicle at the current moment, $\psi_{des}$ is the heading angle of the desired trajectory, ω represents the yaw velocity of the vehicle, and ρ represents the desired target point curvature.

By updating the state error and feeding it back to the control gain, the lateral control effect is more accurate.

Embodiment 7

As shown in Fig. 4, in addition to the technical features of the above-described embodiments, this embodiment further comprises the following technical features.

The step of acquiring a control amount and a compensation amount, according to the control parameter gain, the real-time control parameter gain, the state error, the trajectory curvature, and the vehicle inclination angle, comprising:

Step S302, acquiring a feedback control amount, according to the real-time control parameter gain and the state error feedback amount is:

$$\delta_{sw_b} = -KX$$

wherein, K is the real-time control parameter gain, X is the state error feedback amount;
Step S304, acquiring the position error integral control amount, according to the position error integral is:

$$\delta_{sw_i} = \delta'_{sw_i} + k_i e_y \mathrm{T}$$

wherein, $k_i$ is the integral coefficient, $e_y$ is the lateral position deviation, T is the control period, $\delta'_{sw_i}$ is the control period value of the previous beat of $\delta_{sw_i}$;
Step S306, acquiring a road curvature feedforward compensation amount, according to the trajectory curvature is:

$$\delta_{sw_c} = \frac{mV_x^2}{R_{\mathrm{des}}L}\left[\frac{l_r}{2C_f} - \frac{l_f}{2C_r} + \frac{l_f}{2C_r}k_3'\right] + \frac{L}{R_{\mathrm{des}}} - \frac{l_r}{R_{\mathrm{des}}}k_3'$$

wherein, m is the vehicle mass, $V_x$ is the vehicle longitudinal speed, $l_f$ is the distance from the front axle of the vehicle to the barycenter, $l_r$ is the distance from the rear axle of the vehicle to the barycenter, $C_f$ is the cornering stiffness of the front wheel, $C_r$ is the cornering stiffness of rear wheel, $R_{des}$ is the trajectory radius, L is the sum of $l_f$ and $l_r$;
Step S308, acquiring a road slope feedforward compensation amount, according to the vehicle inclination angle is:

$$\delta_{sw_r} = \frac{A(4,3) - B(1,4)k3}{A(2,3)B(1,4) - A(1,4)B(1,2)} g\sin(\gamma)$$

wherein, A(i, j) is the parameter corresponding to the i-th row and the j-th column of the matrix A, B(i, j) is the parameter corresponding to the i-th row and j-th column of matrix B, g is the gravity acceleration, $\gamma$ is the vehicle inclination angle.

The specific acquisition methods of the feedback control amount, the position error integral control amount, the road curvature feedforward compensation amount, the road slope feedforward compensation amount are given by the above-mentioned formulas. In this embodiment, the road curvature provided by the desired trajectory is used to perform feedforward compensation for the road curvature, the positioning information is used to perform feedforward compensation for the road inclination, and a position deviation integral term is introduced to reduce the position error. And comprehensively consider the uncertainty influence of the road curvature, the road inclination and the vehicle overall parameters to achieve high reliability and high precision tracking of the desired driving trajectory.
This embodiment introduces a position deviation integral term to reduce the position error, to ensure that the steady-state error can still be completely eliminated when the vehicle overall parameters are uncertain.

Embodiment 8

In addition to the technical features of the above-described embodiments, this embodiment further comprises the following technical features.
The step of acquiring an expected steering wheel angle, according to the control amount and the compensation amount, and outputting the expected steering wheel angle to a steering-by-wire system, , comprising:
acquiring the expected steering wheel angle, according to the following formula:

$$\delta_{sw} = (\delta_{sw_b} + \delta_{sw_r} + \delta_{sw_c} + \delta_{sw_i})i$$

Wherein, $\delta_{sw_b}$ is the feedback control amount, $\delta_{sw_i}$ is the position error integral control amount, $\delta_{sw_c}$ is the road curvature feedforward compensation amount, $\delta_{sw_r}$ is the road slope feedforward compensation amount, I is the steering wheel ratio.
According to the calculation results of the feedback control amount, the road curvature feedforward control amount, the road slope feedforward compensation amount, and the position integral control amount, the calculation results are summed, and then multiplied by the steering wheel ratio to obtain the final expected steering wheel angle, which is output to the steering-by- wire system, to achieve path tracking, to ensure that the steady-state error can be completely eliminated when the vehicle overall parameters are uncertain.

Embodiment 9

As shown in Fig. 5, this embodiment provides an apparatus for controlling lateral motion of a self-driving vehicle 100, comprising: a setup module 110; a first acquisition module 120; a second acquisition module 130; a third acquisition module 140; a fourth acquisition module 150; a fifth acquisition module 160; and a sixth acquisition module 170, wherein, the control parameters of the linear quadratic controller are set by the setup module 110, the first acquisition module 120 acquires the vehicle overall parameters, the second acquisition module 130 acquires the control parameter gain according to the control parameters and the vehicle overall parameters, the second acquisition module 130 acquires the control parameter gain according to the control parameters and the vehicle overall parameters, the third acquisition module 140 acquires the real-time control parameter gain according to the control parameter gain, the fourth acquisition module 150 acquires the state error, the trajectory curvature and the vehicle inclination angle, the fifth acquisition module 160 acquires the control amount and the compensation amount according to the control parameter gain, the real-time control parameter gain, the state error, the trajectory curvature and the vehicle inclination angle, the sixth acquisition module 170 acquires the expected steering wheel angle according to the control amount and the compensation amount, and outputs the expected steering wheel angle to the steering-by-wire system.
This embodiment can realize the optimal control of the self-driving vehicle lateral motion without static error, greatly reduce the calculation amount, ensure the convergence of the optimal control gain, and consider the influence of

road curvature, road inclination and the uncertainty of vehicle overall parameters, in order to achieve high reliability and high precision tracking of the desired driving trajectory.

Embodiment 10

As shown in Fig. 6, this embodiment provides a self-driving vehicle 200, comprising: a vehicle body 210 and a control device 220; wherein, the control device controls the running of the vehicle body 210 using the method for controlling lateral motion of a self-driving vehicle as described in any one of the embodiments of the present invention.

Specific embodiment

This embodiment provides a method for controlling lateral motion of a self-driving vehicle (that is, an optimal control method with no lateral static error), which can sufficiently reduce the calculation amount of the optimal control gain and ensure the convergence of the control gain, and consider the uncertainty influence of the road curvature, the road inclination and the overall parameter to achieve high reliability and high precision tracking of the desired driving trajectory.

As shown in Fig. 7, this embodiment first calculates the optimal control gain offline, then uses polynomial to fit the control gain and save it to the computing unit, and then updates the optimal control gain and the state error amount in real time according to the speed fed back by the vehicle. The road curvature is fed-forward compensated by the road curvature provided by the desired trajectory, and the road inclination is fed-forward compensated by the vehicle inclination angle obtained from the positioning information. In addition, the position deviation integral term is introduced to reduce the position error to ensure that the steady-state error can still be completely eliminated when the vehicle overall parameters are uncertain. As shown in Fig. 8, the implementation steps are as follows:

Step S402, calculating the optimal control gain offline and the weight matrix, wherein the control parameters involved in the lateral motion LQR controller comprise the first weighting matrix Q and the second weighting matrix R. Specifically, there are Q=diag[$q_1$, $q_2$, $q_3$, $q_4$], R=[r], that is, a total of 5 parameters of $q_1$, $q_2$, $q_3$, $q_4$ and r; according to the physical quantity associated with the control parameters, determine its importance, and $q_2$, $q_4$, and r are set as fixed values, only for $q_1$, $q_3$, adjust the parameters according to the vehicle speed.

$$q_1 = \begin{cases} q_{1\max} & V_x < V_1 \\ q_{1\max} + \dfrac{q_{1\min} - q_{1\max}}{V_2 - V_1}(V_x - V_1) & V_1 \le V_x \le V_2 \\ q_{1\min} & V_x > V_2 \end{cases}$$

$$q_3 = \begin{cases} q_{3\max} & V_x < V_1 \\ q_{3\max} + \dfrac{q_{3\min} - q_{3\max}}{V_2 - V_1}(V_x - V_1) & V_1 \le V_x \le V_2 \\ q_{3\min} & V_x > V_2 \end{cases}$$

Offline calculation: according to the vehicle overall parameters and the controlled object model, calculating the optimal control gains $k_1$, $k_2$, $k_3$, and $k_4$ offline through the MATLAB function lqr.

$$A = \begin{bmatrix} 0 & 1 & 0 & 0 \\ 0 & -\dfrac{2C_f + 2C_r}{mV_x} & \dfrac{2C_f + 2C_r}{m} & -\dfrac{2C_f l_f - 2C_r l_r}{mV_x} \\ 0 & 0 & 0 & 1 \\ 0 & -\dfrac{2C_f l_f - 2C_r l_r}{I_z V_x} & \dfrac{2C_f l_f - 2C_r l_r}{I_z} & -\dfrac{2C_f l_f^2 + 2C_r l_r^2}{I_z V_x} \end{bmatrix}$$

$$B = \begin{bmatrix} 0 \\ \frac{2C_f}{m} \\ 0 \\ \frac{2C_f l_f}{I_z} \end{bmatrix}$$

$$k_{14} = [k_{14(1)}, k_{14(2)}, k_{14(3)}, k_{14(4)}]$$

$$k_{14} = 1qr(A, B, Q, R)$$

$$k_1 = k_{14(1)}$$

$$k_2 = k_{14(2)}$$

$$k_3 = k_{14(3)}$$

$$k_4 = k_{14(4)}$$

Step S404, Polynomial fitting: according to the calculated optimal control gain results, performing third-order polynomial fitting of the optimal control gain by speed.

$$\begin{cases} k_1 = a_{31}v^3 + a_{21}v^2 + a_{11}v + a_{01} \\ k_2 = a_{32}v^3 + a_{22}v^2 + a_{12}v + a_{02} \\ k_3 = a_{33}v^3 + a_{23}v^2 + a_{13}v + a_{03} \\ k_4 = a_{34}v^3 + a_{24}v^2 + a_{14}v + a_{04} \end{cases}$$

Step S406, Updating gain: calculating the optimal control gain K in real time according to the actual speed fed back by the vehicle wheel speedometer.

$$\begin{cases} k_1' = a_{31}V_x^3 + a_{21}V_x^2 + a_{11}V_x + a_{01} \\ k_2' = a_{32}V_x^3 + a_{22}V_x^2 + a_{12}V_x + a_{02} \\ k_3' = a_{33}V_x^3 + a_{23}V_x^2 + a_{13}V_x + a_{03} \\ k_4' = a_{34}V_x^3 + a_{24}V_x^2 + a_{14}V_x + a_{04} \end{cases}$$

$$K = [k_1', k_2', k_3', k_4']$$

Step S408, Updating state error: calculating the lateral position deviation $e_y$, the lateral position deviation change rate $\dot{e}_y$, the heading angle deviation $e_\psi$, the heading angle deviation change rate $\dot{e}_\psi$, the state error feedback amount X, according to the vehicle position, speed and attitude information output by the positioning system in real time, and the expected trajectory information of the planning.

$$e_y = (y - y_{des})\cos(\psi_{des}) - (x - x_{des})\sin(\psi_{des})$$

$$\dot{e}_y = V_y - V_x(\psi - \psi_{des})$$

$$e_\psi = \psi - \psi_{des}$$

$$\dot{e}_\psi = \omega - V_x\rho$$

$$X = \begin{bmatrix} e_y \\ \dot{e}_y \\ e_\psi \\ \dot{e}_\psi \end{bmatrix}$$

Step S410, Calculating feedback control amount: multiplying the optimal control gain and the state error feedback amount to calculate the state error feedback amount.

$$\delta_{sw_b} = -KX$$

Step S412, Calculating the road curvature feedforward compensation amount: calculating the road curvature compensation amount, according to the trajectory curvature provided by the planning system.

$$\delta_{sw_c} = \frac{mV_x^{\ 2}}{R_{des}L}[\frac{l_r}{2C_f} - \frac{l_f}{2C_r} + \frac{l_f}{2C_r}k_3'] + \frac{L}{R_{des}} - \frac{l_r}{R_{des}}k_3'$$

Step S414, Calculating the road slope feedforward compensation amount: calculating the road slope feedforward compensation amount, according to the vehicle inclination angle provided by the positioning system.

$$\delta_{sw_r} = \frac{A(4,3) - B(1,4)k3}{A(2,3)B(1,4) - A(1,4)B(1,2)} g\sin(\gamma)$$

Step S416, Calculating the position error integral control amount: introducing the integral of the position error, and calculating the integration amount due to the position error by using the incremental integration.

$$\delta_{sw_i} = \delta'_{sw_i} + k_i e_y T$$

Step S420, Calculating the steering wheel angle: summing the calculation results of the road curvature feedforward control amount, the road slope feedforward compensation amount, and the position integral control amount, according to feedback control amount, and then multiplying the steering wheel ratio to obtain the final expected steering wheel angle, and outputting to the steering-by- wire system, implementing path tracking.

$$\delta_{sw} = (\delta_{sw_b} + \delta_{sw_r} + \delta_{sw_c} + \delta_{sw_i})i$$

In the above formula, i is the transmission ratio of the steering mechanism, m represents the vehicle mass; $I_z$ represents the rotary inertia of the vehicle around the vertical direction; $\omega$ represents the yaw velocity of the vehicle; $l_f$ and $l_r$ represent the distance from the front and rear axles of the vehicle to the barycenter, respectively; $C_f$ and $C_r$ are the cornering stiffnesses of the front and rear wheels, respectively, $\gamma$ is the tilt angle provided by the positioning, $\psi$, $\psi_{des}$ are the heading angle of the vehicle at the current moment and the heading angle of the desired trajectory, respectively, ($x$, y), ($x_{des}$, $y_{des}$) are the position of the vehicle at the current moment and the position of the expected trajectory, $k_i$ is the integral coefficient, T is the control period, $\delta'_{sw_i}$ is the control period value of the previous beat of $\delta_{sw_i}$, A (i, j), B(i, j) are the parameters corresponding to the i-th row and the j-th column of the matrices A and B, respectively, and g is the gravity acceleration.

To sum up, the beneficial effects of the present invention embodiments are:

1. This embodiment can realize the optimal control of the self-driving vehicle lateral motion without static error, greatly reduce the calculation amount, ensure the convergence of the optimal control gain, and consider the influence of road curvature, road inclination and the uncertainty of vehicle overall parameters, in order to achieve high reliability and high precision tracking of the desired driving trajectory.

2. This embodiment provides a static error-free method and introduces a position deviation integral term to reduce the position error, to ensure that the steady-state error can still be completely eliminated when the vehicle overall parameters are uncertain.

3. Calculate the optimal control gain in real time according to the actual speed fed back by the vehicle, which not only reduces the calculation amount of the optimal control gain, but also ensures the convergence and reliability of the optimal control gain.

In this application, the terms "first", "second" and "third" are used for descriptive purposes only, and should not be construed as indicating or implying relative importance; the term "plurality" refers to two or two above, unless otherwise expressly defined. The terms "installed", "connected", "connection", "fixed", etc. should be understood in a broad sense. For example, "connected" can be a fixed connection, a detachable connection, or an integral connection; "connection" can be directly connected, or indirectly connected through an intermediate connection. For those of ordinary skill in the art, the specific meanings of the above terms in the present invention can be understood according to specific situations.

In the description of the present invention, the term "multiple" refers to two or more, unless otherwise clearly defined, and it should be understood that the orientation or position relationships indicated by the terms "upper", "lower" "left", "right" and the like are the orientation or position relationships based on what is shown in the drawings, are merely for the convenience of describing the present invention and simplifying the description, and do not indicate or imply that the device or unit referred to must have a particular direction and is constructed and operated in a specific orientation, and thus cannot be understood as the limitation of the present invention.

In the description of the present specification, the descriptions of the terms "one embodiment", "some embodiments" and "specific embodiments" and the like mean that specific features, structures, materials or characteristics described in conjunction with the embodiment(s) or example(s) are comprised in at least one embodiment or example of the present invention. In the specification, the schematic representation of the above terms does not necessarily refer to the same embodiment or example.

The descriptions above are only preferred embodiments of the present invention.

## Claims

**1.** A method for controlling lateral motion of self-driving vehicle, comprising:

setting control parameters of a linear quadratic controller;
acquiring vehicle overall parameters;
acquiring a control parameter gain, according to the control parameters and the vehicle overall parameters;
acquiring a real-time control parameter gain, according to the control parameter gain;
acquiring a state error feedback amount, a trajectory curvature, and a vehicle inclination angle;
acquiring a control amount and a compensation amount, according to the real-time control parameter gain, the state error feedback amount, the trajectory curvature, and the vehicle inclination angle; and
acquiring an expected steering wheel angle, according to the control amount and the compensation amount, and outputting the expected steering wheel angle to a steering-by-wire system,
wherein the step of setting control parameters of a linear quadratic controller comprises:

the control parameters comprise a first weighting matrix Q and a second weighting matrix R, Q=diag[$q_1$, $q_2$, $q_3$, $q_4$], R=[r], wherein, $q_1$, $q_2$, $q_3$, $q_4$ and r are five control parameters, respectively, $q_2$, $q_4$ and r are set to fixed values, and $q_1$, $q_3$ are acquired according to the following formula;

$$q_1 = \begin{cases} q_{1\max} & V_x < V_1 \\ q_{1\max} + \dfrac{q_{1\min} - q_{1\max}}{V_2 - V_1}(V_x - V_1) & V_1 \le V_x \le V_2 \\ q_{1\min} & V_x > V_2 \end{cases}$$

$$q_3 = \begin{cases} q_{3\max} & V_x < V_1 \\ q_{3\max} + \dfrac{q_{3\min} - q_{3\max}}{V_2 - V_1}(V_x - V_1) & V_1 \le V_x \le V_2 \\ q_{3\min} & V_x > V_2 \end{cases}$$

wherein, $q_{1max}$ is the maximum value of $q_1$, $q_{1min}$ is the minimum value of $q_1$, $q_{3max}$ is the maximum value of $q_3$, $q_{3min}$ is the minimum value of $q_3$, $V_x$ is the vehicle longitudinal speed, $V_1$ is the first speed threshold, and $V_2$ is the second speed threshold.

**2.** The method for controlling lateral motion of self-driving vehicle according to claim 1, wherein the step of acquiring a control parameter gain, according to the control parameters and the vehicle overall parameters comprises:

the control parameter gain is acquired according to the following formula:

$$A = \begin{bmatrix} 0 & 1 & 0 & 0 \\ 0 & -\dfrac{2C_f + 2C_r}{mV_x} & \dfrac{2C_f + 2C_r}{m} & -\dfrac{2C_f l_f - 2C_r l_r}{mV_x} \\ 0 & 0 & 0 & 1 \\ 0 & -\dfrac{2C_f l_f - 2C_r l_r}{I_z V_x} & \dfrac{2C_f l_f - 2C_r l_r}{I_z} & -\dfrac{2C_f l_f^2 + 2C_r l_r^2}{I_z V_x} \end{bmatrix}$$

$$B = \begin{bmatrix} 0 \\ \dfrac{2C_f}{m} \\ 0 \\ \dfrac{2C_f l_f}{I_z} \end{bmatrix}$$

$$k_{14} = [k_{14(1)},\ k_{14(2)},\ k_{14(3)},\ k_{14(4)}]$$

$$k_{14} = lqr(A, B, Q, R)$$

$$k_1 = k_{14(1)}$$

$$k_2 = k_{14(2)}$$

$$k_3 = k_{14(3)}$$

$$k_4 = k_{14(4)}$$

wherein, m is the vehicle mass, $I_z$ is the rotary inertia of the vehicle around the vertical direction, $l_f$ is the distance from the front axle of the vehicle to the barycenter, $l_r$ is the distance from the rear axle of the vehicle to the barycenter, $C_f$ is the cornering stiffness of the front wheel, and $C_r$ is the cornering stiffness of rear wheel, $V_x$ is the vehicle longitudinal speed, $k_{14}$ is the control gain convergence matrix, $k_{14(1)}$, $k_{14(2)}$, $k_{14(3)}$, and $k_{14(4)}$ are the four elements in the control gain convergence matrix, respectively, $k_1$, $k_2$, $k_3$, and $k_4$ are four control parameter gains, respectively.

3. The method for controlling lateral motion of self-driving vehicle according to claim 1, wherein the step of acquiring a real-time control parameter gain according to the control parameter gain comprises:

taking the speed as the independent variable, and performing polynomial fitting of the control parameter gain to acquire a first polynomial; and
acquiring the real-time control parameter gain, according to the first polynomial and the real-time vehicle longitudinal speed.

4. The method for controlling lateral motion of self-driving vehicle according to claim 3, wherein the step of acquiring a real-time control parameter gain according to the control parameter gain comprises:

taking the speed as the independent variable, and performing the third-order polynomial fitting of the control parameter gain, and the first polynomial is obtained as:

$$\begin{cases} k_1 = a_{31}v^3 + a_{21}v^2 + a_{11}v + a_{01} \\ k_2 = a_{32}v^3 + a_{22}v^2 + a_{12}v + a_{02} \\ k_3 = a_{33}v^3 + a_{23}v^2 + a_{13}v + a_{03} \\ k_4 = a_{34}v^3 + a_{24}v^2 + a_{14}v + a_{04} \end{cases}$$

wherein, $a_{31}$, $a_{21}$, $a_{11}$, and $a_{01}$ are the third-order polynomial coefficients of the control parameters $k_1$, $a_{32}$, $a_{22}$, $a_{12}$, and $a_{02}$ are the third-order polynomial coefficients of the control parameters $k_2$, $a_{33}$, $a_{23}$, $a_{13}$, and $a_{03}$ are the third-order polynomial coefficients of the control parameters $k_3$, $a_{34}$, $a_{24}$, $a_{14}$, and $a_{04}$ are the third-order polynomial coefficients of control parameters $k_4$, v is the speed;
acquiring the real-time control parameter gain K, according to the first polynomial and the real-time vehicle longitudinal speed:

$$\begin{cases} k_1' = a_{31}V_x^3 + a_{21}V_x^2 + a_{11}V_x + a_{01} \\ k_2' = a_{32}V_x^3 + a_{22}V_x^2 + a_{12}V_x + a_{02} \\ k_3' = a_{33}V_x^3 + a_{23}V_x^2 + a_{13}V_x + a_{03} \\ k_4' = a_{34}V_x^3 + a_{24}V_x^2 + a_{14}V_x + a_{04} \end{cases}$$

$$K = [k_1', k_2', k_3', k_4']$$

wherein, $V_x$ is the vehicle longitudinal speed.

5. The method for controlling lateral motion of self-driving vehicle according to claim 1, wherein the step of acquiring state error feedback amount comprises:

acquiring the state error feedback amount according to the following formula:

$$e_y = (y - y_{des})\cos(\psi_{des}) - (x - x_{des})\sin(\psi_{des})$$

$$\dot{e}_y = V_y - V_x(\psi - \psi_{des})$$

$$e_\psi = \psi - \psi_{des}$$

$$\dot{e}_\psi = \omega - V_x\rho$$

$$X = \begin{bmatrix} e_y \\ \dot{e}_y \\ e_\psi \\ \dot{e}_\psi \end{bmatrix}$$

wherein, $e_y$ is the lateral position deviation, $\dot{e}_y$ is the change rate of the lateral position deviation, $e_\psi$ is the heading angle deviation, $\dot{e}_\psi$ is the change rate of the heading angle deviation, X is the state error feedback amount, $V_x$ is the vehicle longitudinal speed, $V_y$ is the vehicle lateral speed, (*x*, y) is the vehicle position at the current moment, $(x_{des}, y_{des})$ is the desired trajectory position, $\psi$ is the heading angle of the vehicle at the current moment, $\psi_{des}$ is the heading angle of the desired trajectory, $\omega$ represents the yaw velocity of the vehicle, and $\rho$ represents the desired target point curvature.

**6.** The method for controlling lateral motion of self-driving vehicle according to claim 1, wherein the step of acquiring a control amount and a compensation amount, according to the control parameter gain, the real-time control parameter gain, the state error, the trajectory curvature, and the vehicle inclination angle comprises:

acquiring a feedback control amount, according to the real-time control parameter gain and the state error feedback amount is:

$$\delta_{sw_b} = -KX$$

wherein, K is the real-time control parameter gain, X is the state error feedback amount;
acquiring the position error integral control amount, according to the position error integral is:

$$\delta_{sw_i} = \delta'_{sw_i} + k_i e_y \mathrm{T}$$

wherein, $k_i$ is the integral coefficient, $e_y$ is the lateral position deviation, T is the control period, $\delta'_{sw_i}$ is the control period value of the previous beat of $\delta_{sw_i}$;
acquiring a road curvature feedforward compensation amount, according to the trajectory curvature is:

$$\delta_{sw_c} = \frac{mV_x^2}{R_{\mathrm{des}}L}\left[\frac{l_r}{2C_f} - \frac{l_f}{2C_r} + \frac{l_f}{2C_r}k_3'\right] + \frac{L}{R_{\mathrm{des}}} - \frac{l_r}{R_{\mathrm{des}}}k_3'$$

wherein, m is the vehicle mass, $V_x$ is the vehicle longitudinal speed, $l_f$ is the distance from the front axle of the vehicle to the barycenter, $l_r$ is the distance from the rear axle of the vehicle to the barycenter, $C_f$ is the cornering stiffness of the front wheel, $C_r$ is the cornering stiffness of rear wheel, $R_{des}$ is the trajectory radius, L is the sum of $l_f$ and $l_r$; and
acquiring a road slope feedforward compensation amount, according to the vehicle inclination angle is:

$$\delta_{sw_r} = \frac{\mathrm{A}(4,3) - \mathrm{B}(1,4)\mathrm{k3}}{\mathrm{A}(2,3)\mathrm{B}(1,4) - \mathrm{A}(1,4)\mathrm{B}(1,2)}\mathrm{g}\sin(\gamma)$$

wherein, A(i, j) is the parameter corresponding to the i-th row and the j-th column of the matrix A, B(i, j) is the parameter corresponding to the i-th row and j-th column of matrix B, g is the gravity acceleration, $\gamma$ is the vehicle inclination angle.

**7.** The method for controlling lateral motion of self-driving vehicle according to claim 1, wherein the step of acquiring an expected steering wheel angle, according to the control amount and the compensation amount, and outputting the expected steering wheel angle to a steering-by-wire system comprises:

acquiring the expected steering wheel angle, according to the following formula:

$$\delta_{sw} = (\delta_{sw_b} + \delta_{sw_r} + \delta_{sw_c} + \delta_{sw_i})i$$

wherein, $\delta_{sw_b}$ is the feedback control amount, $\delta_{sw_i}$ is the position error integral control amount, $\delta_{sw_c}$ is the road curvature feedforward compensation amount, $\delta_{sw_r}$ is the road slope feedforward compensation amount, I is the steering wheel ratio.

**8.** An apparatus for controlling lateral motion of self-driving vehicle (100) according to the method of claim 1, comprising:

a setup module (110);
a first acquisition module (120);
a second acquisition module (130);
a third acquisition module (140);
a fourth acquisition module (150);
a fifth acquisition module (160); and
a sixth acquisition module (170),
wherein, the control parameters of a linear quadratic controller are set by the setup module (110),
the first acquisition module (120) acquires the vehicle overall parameters;
the second acquisition module (130) acquires the control parameter gain according to the control parameters and the vehicle overall parameters;
the second acquisition module (130) acquires the control parameter gain according to the control parameters and the vehicle overall parameters;
the third acquisition module (140) acquires the real-time control parameter gain according to the control parameter gain;
the fourth acquisition module (150) acquires the state error, the trajectory curvature and the vehicle inclination angle;
the fifth acquisition module (160) acquires the control amount and the compensation amount according to the control parameter gain, the real-time control parameter gain, the state error, the trajectory curvature and the vehicle inclination angle; and
the sixth acquisition module (170) acquires the expected steering wheel angle according to the control amount and the compensation amount, and outputs the expected steering wheel angle to the steering-by-wire system.

**9.** A self-driving vehicle (200), comprising:

a vehicle body (210);
a control device (220); and
wherein, the control device (220) controls the running of the vehicle body (210) using the method for controlling lateral motion of a self-driving vehicle as described in any one of claims 1 to 7.

## Patentansprüche

**1.** Verfahren zum Steuern der Querbewegung eines selbstfahrenden Fahrzeugs, umfassend:

Einstellen von Steuerparametern einer linearen quadratischen Steuerung;
Erfassen von Fahrzeuggesamtparametern;
Erfassen einer Steuerparameterverstärkung gemäß den Steuerparametern und den Fahrzeuggesamtparametern;
Erfassen einer Echtzeit-Steuerparameterverstärkung gemäß der Steuerparameterverstärkung;
Erfassen einer Zustandsfehlerrückkopplungsgröße, einer Trajektorienkrümmung und eines Fahrzeuganstellwinkels;
Erfassen einer Steuergröße und einer Kompensationsgröße gemäß der Echtzeit-Steuerparameterverstärkung, der Zustandsfehlerrückkopplungsgröße, der Trajektorienkrümmung und dem Fahrzeuganstellwinkel; und
Erfassen eines erwarteten Lenkradwinkels gemäß der Steuergröße und der Kompensationsgröße und Ausgeben des erwarteten Lenkradwinkels an ein Steer-by-Wire-System, wobei der Schritt des Einstellens von Steuerparametern einer linearen quadratischen Steuerung umfasst:

die Steuerparameter umfassen eine erste Gewichtungsmatrix Q und eine zweite Gewichtungsmatrix R,

$Q=diag[q_1, q_2, q_3, q_4]$, $R=[r]$, wobei $q_1, q_2, q_3, q_4$ und r fünf Steuerparameter sind, jeweils, $q_2, q_4$ und r auf feste Werte festgelegt sind, und $q_1, q_3$ gemäß der folgenden Formel erhalten werden;

$$q_1 = \begin{cases} q_{1\max} & V_x < V_1 \\ q_{1\max} + \dfrac{q_{1\min} - q_{1\max}}{V_2 - V_1}(V_x - V_1) & V_1 \le V_x \le V_2 \\ q_{1\min} & V_x > V_2 \end{cases}$$

$$q_3 = \begin{cases} q_{3\max} & V_x < V_1 \\ q_{3\max} + \dfrac{q_{3\min} - q_{3\max}}{V_2 - V_1}(V_x - V_1) & V_1 \le V_x \le V_2 \\ q_{3\min} & V_x > V_2 \end{cases}$$

wobei $q_{1max}$ der maximale Wert von $q_1$ ist, $q_{1min}$ der minimale Wert von $q_1$ ist, $q_{3max}$ der maximale Wert von $q_3$ ist, $q_{3min}$ der minimale Wert von $q_3$ ist, $V_x$ die Fahrzeuglängsgeschwindigkeit ist, $V_1$ der erste Geschwindigkeitsschwellenwert ist und $V_2$ der zweite Geschwindigkeitsschwellenwert ist.

**2.** Verfahren zum Steuern der Querbewegung eines selbstfahrenden Fahrzeugs nach Anspruch 1, wobei der Schritt des Erfassens einer Steuerparameterverstärkung gemäß den Steuerparametern und den Fahrzeuggesamtparametern umfasst:

die Steuerparameterverstärkung wird gemäß der folgenden Formel ermittelt:

$$A = \begin{bmatrix} 0 & 1 & 0 & 0 \\ 0 & -\dfrac{2C_f + 2C_r}{mV_x} & \dfrac{2C_f + 2C_r}{m} & -\dfrac{2C_f l_f - 2C_r l_r}{mV_x} \\ 0 & 0 & 0 & 1 \\ 0 & -\dfrac{2C_f l_f - 2C_r l_r}{I_z V_x} & \dfrac{2C_f l_f - 2C_r l_r}{I_z} & -\dfrac{2C_f l_f^2 + 2C_r l_r^2}{I_z V_x} \end{bmatrix}$$

$$B = \begin{bmatrix} 0 \\ \dfrac{2C_f}{m} \\ 0 \\ \dfrac{2C_f l_f}{I_z} \end{bmatrix}$$

$$k_{14} = [k_{14(1)}, k_{14(2)}, k_{14(3)}, k_{14(4)}]$$

$$k_{14} = lqr(A, B, Q, R)$$

$$k_1 = k_{14(1)}$$

$$k_2 = k_{14(2)}$$

$$k_3 = k_{14(3)}$$

$$k_4 = \mathrm{k}_{14(4)}$$

wobei m die Fahrzeugmasse ist, $I_z$ die Rotationsträgheit des Fahrzeugs um die vertikale Richtung ist, $l_f$ der Abstand von der Vorderachse des Fahrzeugs zum Schwerpunkt ist, $l_r$ der Abstand von der Hinterachse des Fahrzeugs zum Schwerpunkt ist, $C_f$ die Kurvensteifigkeit des Vorderrads ist und $C_r$ die Kurvensteifigkeit des Hinterrads ist, $V_x$ die Fahrzeuglängsgeschwindigkeit ist, $k_{14}$ die Steuerverstärkungskonvergenzmatrix ist, $k_{14(1)}$, $k_{14(2)}$, $k_{14(3)}$ und $k_{14(4)}$ jeweils die vier Elemente in der Steuerverstärkungskonvergenzmatrix sind, $k_1$, $k_2$, $k_3$ und $k_4$ jeweils vier Steuerparameterverstärkungen sind.

**3.** Verfahren zum Steuern der Querbewegung eines selbstfahrenden Fahrzeugs nach Anspruch 1, wobei der Schritt des Erfassens einer Echtzeit-Steuerparameterverstärkung gemäß der Steuerparameterverstärkung umfasst:

Nehmen der Geschwindigkeit als unabhängige Variable und Durchführen einer Polynomanpassung der Steuerparameterverstärkung, um ein erstes Polynom zu erhalten; und

Erfassen der Echtzeit-Steuerparameterverstärkung gemäß dem ersten Polynom und der Echtzeit-Fahrzeuglängsgeschwindigkeit.

**4.** Verfahren zum Steuern der Querbewegung eines selbstfahrenden Fahrzeugs nach Anspruch 3, wobei der Schritt des Erfassens einer Echtzeit-Steuerparameterverstärkung gemäß der Steuerparameterverstärkung umfasst:

Nehmen der Geschwindigkeit als unabhängige Variable und Durchführen einer Polynomanpassung dritter Ordnung der Steuerparameterverstärkung, und das erste Polynom wird erhalten als:

$$\begin{cases} \mathrm{k}_1 = a_{31}v^3 + a_{21}v^2 + a_{11}v + a_{01} \\ \mathrm{k}_2 = a_{32}v^3 + a_{22}v^2 + a_{12}v + a_{02} \\ \mathrm{k}_3 = a_{33}v^3 + a_{23}v^2 + a_{13}v + a_{03} \\ \mathrm{k}_4 = a_{34}v^3 + a_{24}v^2 + a_{14}v + a_{04} \end{cases}$$

wobei $a_{31}$, $a_{21}$, $a_{11}$ und $a_{01}$ die Polynomkoeffizienten dritter Ordnung der Steuerparameter $k_1$ sind, $a_{32}$, $a_{22}$, $a_{12}$ und $a_{02}$ die Polynomkoeffizienten dritter Ordnung der Steuerparameter $k_2$ sind, $a_{33}$, $a_{23}$, $a_{13}$ und $a_{03}$ die Polynomkoeffizienten dritter Ordnung der Steuerparameter $k_3$ sind, $a_{34}$, $a_{24}$, $a_{14}$ und $a_{04}$ die Polynomkoeffizienten dritter Ordnung der Steuerparameter $k_4$ sind, v die Geschwindigkeit ist;

Erfassen der Echtzeit-Steuerparameterverstärkung K gemäß dem ersten Polynom und der Echtzeit-Fahrzeuglängsgeschwindigkeit:

$$\begin{cases} \mathrm{k}'_1 = a_{31}V_x^3 + a_{21}V_x^2 + a_{11}V_x + a_{01} \\ \mathrm{k}'_2 = a_{32}V_x^3 + a_{22}V_x^2 + a_{12}V_x + a_{02} \\ \mathrm{k}'_3 = a_{33}V_x^3 + a_{23}V_x^2 + a_{13}V_x + a_{03} \\ \mathrm{k}'_4 = a_{34}V_x^3 + a_{24}V_x^2 + a_{14}V_x + a_{04} \end{cases}$$

$$K = [k'_1, k'_2, k'_3, k'_4]$$

wobei $V_x$ die Fahrzeuglängsgeschwindigkeit ist.

**5.** Verfahren zum Steuern der Querbewegung eines selbstfahrenden Fahrzeugs nach Anspruch 1, wobei der Schritt des Erfassens der Zustandsfehlerrückkopplungsgröße umfasst:

Erfassen der Zustandsfehlerrückkopplungsgröße gemäß der folgenden Formel:

$$e_y = (y - y_{des})\cos(\psi_{des}) - (x - x_{des})\sin(\psi_{des})$$

$$\dot{e}_y = V_y - V_x(\psi - \psi_{des})$$

$$e_\psi = \psi - \psi_{des}$$

$$\dot{e}_\psi = \omega - V_x\rho$$

$$X = \begin{bmatrix} e_y \\ \dot{e}_y \\ e_\psi \\ \dot{e}_\psi \end{bmatrix}$$

wobei $e_y$ die laterale Positionsabweichung ist, $\dot{e}_y$ die Änderungsrate der lateralen Positionsabweichung ist, $e_\psi$ die Kurswinkelabweichung ist, $\dot{e}_\psi$ die Änderungsrate der Kurswinkelabweichung ist, X die Zustandsfehlerrückkopplungsgröße ist, $V_x$ die Fahrzeuglängsgeschwindigkeit ist, $V_y$ die Fahrzeugquergeschwindigkeit ist, *(x, y)* die Fahrzeugposition zum aktuellen Zeitpunkt ist, ($x_{des}$, $y_{des}$) die gewünschte Trajektorienposition ist, $\Psi$ der Kurswinkel des Fahrzeugs zum aktuellen Zeitpunkt ist, $\Psi_{des}$ der Kurswinkel der gewünschten Trajektorie ist, co die Giergeschwindigkeit des Fahrzeugs darstellt und p die gewünschte Zielpunktkrümmung darstellt.

**6.** Verfahren zum Steuern der Querbewegung eines selbstfahrenden Fahrzeugs nach Anspruch 1, wobei der Schritt des Erfassens einer Steuergröße und einer Kompensationsgröße gemäß der Steuerparameterverstärkung, der Echtzeit-Steuerparameterverstärkung, dem Zustandsfehler, der Trajektorienkrümmung und dem Fahrzeuganstellwinkel umfasst:

Erfassen einer Rückkopplungssteuergröße gemäß der Echtzeit-Steuerparameterverstärkung und die Zustandsfehlerrückkopplungsgröße ist:

$$\delta_{sw_b} = -KX$$

wobei K die Echtzeit-Steuerparameterverstärkung ist, X die Zustandsfehlerrückkopplungsgröße ist;
Erfassen der Positionsfehlerintegral-Steuergröße gemäß dem Positionsfehlerintegral ist:

$$\delta_{sw_i} = \delta'_{sw_i} + k_i e_y T$$

wobei $k_i$ der Integralkoeffizient ist, $e_y$ die seitliche Positionsabweichung ist, T die Steuerperiode ist, $\delta'_{sw_i}$ der Steuerperiodenwert des vorherigen Takts von $\delta_{sw_i}$ ist;
Erfassen einer Straßenkrümmungs-Vorsteuerungskompensationsgröße gemäß der Trajektorienkrümmung ist:

$$\delta_{sw_c} = \frac{mV_x^2}{R_{des}L}\left[\frac{l_r}{2C_f} - \frac{l_f}{2C_r} + \frac{l_f}{2C_r}k_3'\right] + \frac{L}{R_{des}} - \frac{l_r}{R_{des}}k_3'$$

wobei m die Fahrzeugmasse ist, $V_x$ die Fahrzeuglängsgeschwindigkeit ist, $l_f$ der Abstand von der Vorderachse des Fahrzeugs zum Schwerpunkt ist, $l_r$ der Abstand von der Hinterachse des Fahrzeugs zum Schwerpunkt ist, $C_f$ die Kurvensteifigkeit des Vorderrads ist, $C_r$ die Kurvensteifigkeit des Hinterrads ist, $R_{des}$ der Bahnradius ist, L die Summe von $l_f$ und $l_r$ ist; und
Erfassen einer Straßenneigungs-Vorsteuerungskompensationsgröße gemäß dem FahrzeugAnstellwinkel ist:

$$\delta_{sw_r} = \frac{A(4,3) - B(1,4)k3}{A(2,3)B(1,4) - A(1,4)B(1,2)} g\sin(\gamma)$$

wobei A(i, j) der Parameter ist, der der i-ten Zeile und der j-ten Spalte der Matrix A entspricht, B(i, j) der Parameter ist, der der i-ten Zeile und j-ten Spalte der Matrix B entspricht, g die Gravitationsbeschleunigung ist, $\gamma$ der FahrzeugAnstellwinkel ist.

**7.** Verfahren zum Steuern der Querbewegung eines selbstfahrenden Fahrzeugs nach Anspruch 1, wobei der Schritt des Erfassens eines erwarteten Lenkradwinkels gemäß der Steuergröße und der Kompensationsgröße und des Ausgebens des erwarteten Lenkradwinkels an ein Steer-by-Wire-System umfasst:

Erfassen des erwarteten Lenkradwinkels gemäß der folgenden Formel:

$$\delta_{sw} = (\delta_{sw_b} + \delta_{sw_r} + \delta_{sw_c} + \delta_{sw_i})i$$

wobei $\delta_{sw_b}$ die Rückkopplungssteuergröße ist, $\delta_{sw_i}$ die Positionsfehler-Integralsteuergröße ist, $\delta_{sw_c}$ die Straßenkrümmungs-Vorsteuerungskompensationsgröße ist, $\delta_{sw_r}$ die Straßenneigungs-Vorsteuerungskompensationsgröße ist, I das Lenkradverhältnis ist.

**8.** Vorrichtung zum Steuern der Querbewegung eines selbstfahrenden Fahrzeugs (100) gemäß dem Verfahren nach Anspruch 1, umfassend:

ein Einrichtungsmodul (110);
ein erstes Erfassungsmodul (120);
ein zweites Erfassungsmodul (130);
ein drittes Erfassungsmodul (140);
ein viertes Erfassungsmodul (150);
ein fünftes Erfassungsmodul (160); und
ein sechstes Erfassungsmodul (170),
wobei die Steuerparameter einer linearen quadratischen Steuerung durch das Einrichtungsmodul (110) eingestellt werden,
das erste Erfassungsmodul (120) die Fahrzeuggesamtparameter erfasst;
das zweite Erfassungsmodul (130) die Steuerparameterverstärkung entsprechend den Steuerparametern und den Fahrzeuggesamtparametern erfasst;
das zweite Erfassungsmodul (130) die Steuerparameterverstärkung entsprechend den Steuerparametern und den Fahrzeuggesamtparametern erfasst;
das dritte Erfassungsmodul (140) die Echtzeit-Steuerparameterverstärkung entsprechend der Steuerparameterverstärkung erfasst;
das vierte Erfassungsmodul (150) den Zustandsfehler, die Trajektorienkrümmung und den Fahrzeuganstellwinkel erfasst;
das fünfte Erfassungsmodul (160) die Steuergröße und die Kompensationsgröße entsprechend der Steuerparameterverstärkung, der Echtzeit-Steuerparameterverstärkung, dem Zustandsfehler, der Trajektorienkrümmung und dem Fahrzeuganstellwinkel erfasst; und
das sechste Erfassungsmodul (170) den erwarteten Lenkradwinkel entsprechend der Steuergröße und der Kompensationsgröße erfasst und den erwarteten Lenkradwinkel an das Steer-by-Wire-System ausgibt.

**9.** Selbstfahrendes Fahrzeug (200), umfassend:

eine Fahrzeugkarosserie (210);
eine Steuervorrichtung (220); und
wobei die Steuervorrichtung (220) das Fahren der Fahrzeugkarosserie (210) unter Verwendung des Verfahrens zum Steuern der Querbewegung eines selbstfahrenden Fahrzeugs nach einem der Ansprüche 1 bis 7 steuert.

## Revendications

**1.** Procédé de commande d'un mouvement latéral d'un véhicule autonome, comprenant:

le réglage des paramètres de commande d'un dispositif de commande quadratique linéaire;
l'acquisition de paramètres globaux du véhicule;

l'acquisition d'un gain de paramètre de commande, selon les paramètres de commande et les paramètres globaux de véhicule;
l'acquisition d'un gain de paramètre de commande en temps réel, selon le gain de paramètre de commande;
l'acquisition d'un montant de rétroaction d'erreur d'état, d'une courbure de trajectoire et d'un angle d'inclinaison de véhicule;
l'acquisition d'un montant de commande et d'un montant de compensation, en fonction du gain de paramètre de commande en temps réel, de la quantité de rétroaction d'erreur d'état, de la courbure de trajectoire et de l'angle d'inclinaison de véhicule; et
l'acquisition d'un angle de volant de direction attendu, selon le montant de commande et le montant de compensation, et la fourniture de l'angle de volant de direction attendu à un système de direction par câble,
dans lequel l'étape de réglage des paramètres de commande d'un dispositif de commande quadratique linéaire comprend:

les paramètres de commande comprennent une première matrice de pondération Q et une seconde matrice de pondération R, Q = diag[$q_1$, $q_2$, $q_3$, $q_4$], R = [r], dans lequel $q_1$, $q_2$, $q_3$, $q_4$ et r sont respectivement cinq paramètres de commande, $q_2$, $q_4$ et r sont définis sur des valeurs fixes, et $q_1$, $q_3$ sont acquis selon la formule suivante;

$$q_1 = \begin{cases} q_{1\max} & V_x < V_1 \\ q_{1\max} + \dfrac{q_{1\min} - q_{1\max}}{V_2 - V_1}(V_x - V_1) & V_1 \le V_x \le V_2 \\ q_{1\min} & V_x > V_2 \end{cases}$$

$$q_3 = \begin{cases} q_{3\max} & V_x < V_1 \\ q_{3\max} + \dfrac{q_{3\min} - q_{3\max}}{V_2 - V_1}(V_x - V_1) & V_1 \le V_x \le V_2 \\ q_{3\min} & V_x > V_2 \end{cases}$$

dans lequel, $q_{1max}$ est la valeur maximale de $q_1$, $q_{1min}$ est la valeur minimale de $q_1$, $q_{3max}$ est la valeur maximale de $q_3$, $q_{3min}$ est la valeur minimale de $q_3$, $V_x$ est la vitesse longitudinale de véhicule, $V_1$ est le premier seuil de vitesse, et $V_2$ est le second seuil de vitesse.

**2.** Procédé de commande d'un mouvement latéral d'un véhicule autonome selon la revendication 1, dans lequel l'étape d'acquisition d'un gain de paramètre de commande, selon les paramètres de commande et les paramètres globaux de véhicule comprend:

le gain de paramètre de commande est acquis selon la formule suivante:

$$A = \begin{bmatrix} 0 & 1 & 0 & 0 \\ 0 & -\dfrac{2C_f + 2C_r}{mV_x} & \dfrac{2C_f + 2C_r}{m} & -\dfrac{2C_f l_f - 2C_r l_r}{mV_x} \\ 0 & 0 & 0 & 1 \\ 0 & -\dfrac{2C_f l_f - 2C_r l_r}{I_z V_x} & \dfrac{2C_f l_f - 2C_r l_r}{I_z} & -\dfrac{2C_f l_f^2 + 2C_r l_r^2}{I_z V_x} \end{bmatrix}$$

$$B = \begin{bmatrix} 0 \\ \dfrac{2C_f}{m} \\ 0 \\ \dfrac{2C_f l_f}{I_z} \end{bmatrix}$$

$$k_{14} = [k_{14(1)},\ k_{14(2)},\ k_{14(3)},\ k_{14(4)}]$$

$$k_{14} = 1qr(A, B, Q, R)$$

$$k_1 = k_{14(1)}$$

$$k_2 = k_{14(2)}$$

$$k_3 = k_{14(3)}$$

$$k_4 = k_{14(4)}$$

dans lequel, m est la masse du véhicule, $I_z$ est l'inertie rotative du véhicule autour de la direction verticale, $l_f$ est la distance entre l'essieu avant du véhicule et le barycentre, $l_r$ est la distance entre l'essieu arrière du véhicule et le barycentre, $C_f$ est la rigidité en virage de la roue avant, et $C_r$ est la rigidité en virage de la roue arrière, $V_x$ est la vitesse longitudinale du véhicule, $k_{14}$ est la matrice de convergence de gain de commande, $k_{14(1)}$, $k_{14(2)}$, $k_{14(3)}$, et $k_{14(4)}$ sont les quatre éléments de la matrice de convergence de gain de commande, respectivement, $k_1$, $k_2$, $k_3$ et $k_4$ sont quatre gains de paramètres de commande, respectivement.

**3.** Procédé de commande de mouvement latéral d'un véhicule autonome selon la revendication 1, dans lequel l'étape d'acquisition d'un gain de paramètre de commande en temps réel selon le gain de paramètre de commande comprend:

la prise en considération de la vitesse comme variable indépendante, et la réalisation d'un ajustement polynomial du gain de paramètre de commande pour acquérir un premier polynôme; et
l'acquisition du gain de paramètre de commande en temps réel, selon le premier polynôme et la vitesse longitudinale de véhicule en temps réel.

**4.** Procédé de commande de mouvement latéral d'un véhicule autonome selon la revendication 3, dans lequel l'étape d'acquisition d'un gain de paramètre de commande en temps réel selon le gain de paramètre de commande comprend:

en prenant la vitesse en guise de variable indépendante, et en effectuant l'ajustement polynomial de troisième ordre du gain de paramètre de commande, et le premier polynôme est obtenu en tant que:

$$\begin{cases} k_1 = a_{31}v^3 + a_{21}v^2 + a_{11}v + a_{01} \\ k_2 = a_{32}v^3 + a_{22}v^2 + a_{12}v + a_{02} \\ k_3 = a_{33}v^3 + a_{23}v^2 + a_{13}v + a_{03} \\ k_4 = a_{34}v^3 + a_{24}v^2 + a_{14}v + a_{04} \end{cases}$$

dans lequel, $a_{31}$, $a_{21}$, $a_{11}$, et $a_{01}$ sont les coefficients polynomiaux du troisième ordre des paramètres de commande $k_1$, $a_{32}$, $a_{22}$, $a_{12}$, et $a_{02}$ sont les coefficients polynomiaux du troisième ordre des paramètres de commande $k_2$, $a_{33}$, $a_{23}$, $a_{13}$, et $a_{03}$ sont les les coefficients polynomiaux du troisième ordre des paramètres de commande $k_3$, $a_{34}$, $a_{24}$, $a_{14}$, et $a_{04}$ sont les coefficients polynomiaux du troisième ordre des paramètres de commande $k_4$, v est la vitesse;
l'acquisition du gain de paramètre de commande en temps réel K, selon le premier polynôme et la vitesse longitudinale de véhicule en temps réel:

$$\begin{cases} k_1' = a_{31}V_x^3 + a_{21}V_x^2 + a_{11}V_x + a_{01} \\ k_2' = a_{32}V_x^3 + a_{22}V_x^2 + a_{12}V_x + a_{02} \\ k_3' = a_{33}V_x^3 + a_{23}V_x^2 + a_{13}V_x + a_{03} \\ k_4' = a_{34}V_x^3 + a_{24}V_x^2 + a_{14}V_x + a_{04} \end{cases}$$

$$K = [k_1', k_2', k_3', k_4']$$

dans lequel, $V_x$ est la vitesse longitudinale de véhicule.

**5.** Procédé de commande de mouvement latéral d'un véhicule autonome selon la revendication 1, dans lequel l'étape d'acquisition d'un montant de rétroaction d'erreur d'état comprend:

l'acquisition de la quantité de rétroaction d'erreur d'état selon la formule suivante:

$$e_y = (y - y_{des})\cos(\psi_{des}) - (x - x_{des})\sin(\psi_{des})$$

$$\dot{e}_y = V_y - V_x(\psi - \psi_{des})$$

$$e_\psi = \psi - \psi_{des}$$

$$\dot{e}_\psi = \omega - V_x\rho$$

$$X = \begin{bmatrix} e_y \\ \dot{e}_y \\ e_\psi \\ \dot{e}_\psi \end{bmatrix}$$

dans lequel, $e_y$ est l'écart de position latérale, $\dot{e}_y$ est le taux de variation de l'écart de position latérale, $e_\Psi$ est l'écart d'angle de cap, $\dot{e}_\Psi$ est le taux de variation de l'écart d'angle de cap, X est la quantité de rétroaction d'erreur d'état, $V_x$ est la vitesse longitudinale du véhicule, $V_y$ est la vitesse latérale du véhicule, (x, y) est la position du véhicule au moment actuel, ($x_{des}$, $y_{des}$) est la position de trajectoire souhaitée, Ψ est l'angle de cap du véhicule au moment actuel, $\Psi_{des}$ est l'angle de cap de la trajectoire souhaitée, co représente la vitesse de lacet du véhicule et p représente la courbure souhaitée du point cible.

**6.** Procédé de commande de mouvement latéral d'un véhicule autonome selon la revendication 1, dans lequel l'étape d'acquisition d'un montant de commande et d'un montant de compensation, selon le gain de paramètre de commande, le gain de paramètre de commande en temps réel, l'erreur d'état, la courbure de trajectoire et l'angle d'inclinaison de véhicule comprend:

l'acquisition d'un montant de commande de rétroaction, selon le gain de paramètre de commande en temps réel et la quantité de rétroaction d'erreur d'état est:

$$\delta_{sw_b} = -KX$$

dans lequel K est le gain de paramètre de commande en temps réel, X est la quantité de rétroaction d'erreur d'état; l'acquisition du montant de commande d'intégrale d'erreur de position, selon l'intégrale d'erreur de position est:

$$\delta_{sw_i} = \delta'_{sw_i} + k_i e_y T$$

dans lequel, $k_i$ est le coefficient intégral, $e_y$ est l'écart de position latérale, T est la période de commande, $\delta'_{sw_i}$ est la valeur de période de commande du battement précédent de $\delta_{sw_i}$;
l'acquisition d'un montant de compensation anticipatif de courbure de route, en fonction de la courbure de trajectoire est:

$$\delta_{sw_c} = \frac{mV_x^2}{R_{des}L}[\frac{l_r}{2C_f} - \frac{l_f}{2C_r} + \frac{l_f}{2C_r}k_3'] + \frac{L}{R_{des}} - \frac{l_r}{R_{des}}k_3'$$

dans lequel, m est la masse du véhicule, $V_x$ est la vitesse longitudinale du véhicule, $l_f$ est la distance entre l'essieu avant du véhicule et le barycentre, $l_r$ est la distance entre l'essieu arrière du véhicule et le barycentre, $C_f$ est la rigidité en virage de la roue avant, $C_r$ est la rigidité en virage de la roue arrière, $R_{des}$ est le rayon de la trajectoire, L est la somme de $l_f$ et $l_r$; et
l'acquisition d'un montant de compensation anticipative de pente de route, en fonction de l'angle d'inclinaison de véhicule est:

$$\delta_{sw_r} = \frac{A(4,3) - B(1,4)k3}{A(2,3)B(1,4) - A(1,4)B(1,2)} g\sin(\gamma)$$

dans lequel A(i, j) est le paramètre correspondant à la i-ième rangée et à la j-ième colonne de la matrice A, B(i, j) est le paramètre correspondant à la i-ième rangée et à la j-ième colonne de la matrice B, g est l'accélération gravitationnelle, y est l'angle d'inclinaison de véhicule.

**7.** Procédé de commande d'un mouvement latéral d'un véhicule autonome selon la revendication 1, dans lequel l'étape d'acquisition d'un angle de volant de direction attendu, selon le montant de commande et le montant de compensation, et de production de l'angle de volant de direction attendu à un système de direction par câble comprend:

l'acquisition de l'angle de volant de direction attendu, selon la formule suivante:

$$\delta_{sw} = (\delta_{sw_b} + \delta_{sw_r} + \delta_{sw_c} + \delta_{sw_i})i$$

dans lequel, $\delta_{sw_b}$ est le montant de commande de rétroaction, $\delta s_{w_i}$ est le montant de commande d'intégrale d'erreur de position, $\delta_{sw_c}$ est le montant de compensation anticipative de courbure de route, $\delta_{sw_r}$ est le montant de compensation anticipative de pente de route, I est le rapport du volant de direction.

**8.** Appareil de commande d'un mouvement latéral d'un véhicule autonome (100) selon le procédé selon la revendication 1, comprenant:

un module de configuration (110);
un premier module d'acquisition (120);
un deuxième module d'acquisition (130);
un troisième module d'acquisition (140);
un quatrième module d'acquisition (150);
un cinquième module d'acquisition (160); et
un sixième module d'acquisition (170),
dans lequel les paramètres de commande d'un dispositif de commande quadratique linéaire sont définis par le module de configuration (110),
le premier module d'acquisition (120) acquiert les paramètres globaux du véhicule;
le deuxième module d'acquisition (130) acquiert le gain de paramètre de commande selon les paramètres de commande et les paramètres globaux de véhicule;
le deuxième module d'acquisition (130) acquiert le gain de paramètre de commande selon les paramètres de commande et les paramètres globaux de véhicule;
le troisième module d'acquisition (140) acquiert le gain de paramètre de commande en temps réel selon le gain de paramètre de commande;
le quatrième module d'acquisition (150) acquiert l'erreur d'état, la courbure de trajectoire et l'angle d'inclinaison de véhicule;
le cinquième module d'acquisition (160) acquiert le montant de commande et le montant de compensation en

fonction du gain de paramètre de commande, du gain de paramètre de commande en temps réel, de l'erreur d'état, de la courbure de trajectoire et de l'angle d'inclinaison de véhicule; et
le sixième module d'acquisition (170) acquiert l'angle de volant de direction attendu selon le montant de commande et le montant de compensation, et délivre en sortie l'angle de volant de direction attendu au système de direction par câble.

**9.** Véhicule autonome (200), comprenant:

un corps de véhicule (210);
un dispositif de commande (220); et
dans lequel le dispositif de commande (220) commande le fonctionnement de la carrosserie du véhicule (210) à l'aide du procédé de commande du mouvement latéral d'un véhicule autonome tel que décrit dans l'une quelconque des revendications 1 à 7.

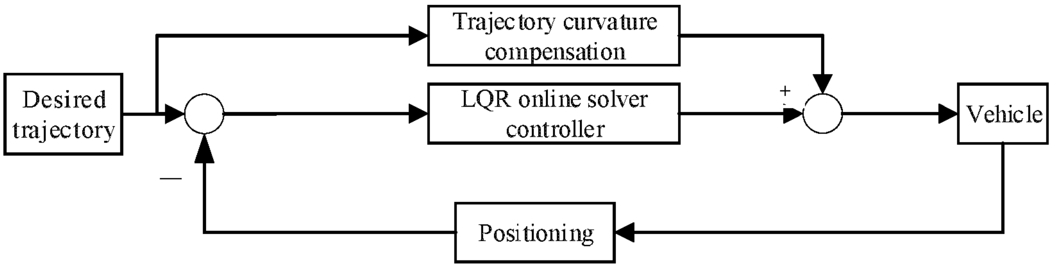
Desired trajectory
Trajectory curvature compensation
LQR online solver controller
+
Vehicle
—
Positioning

FIG. 1

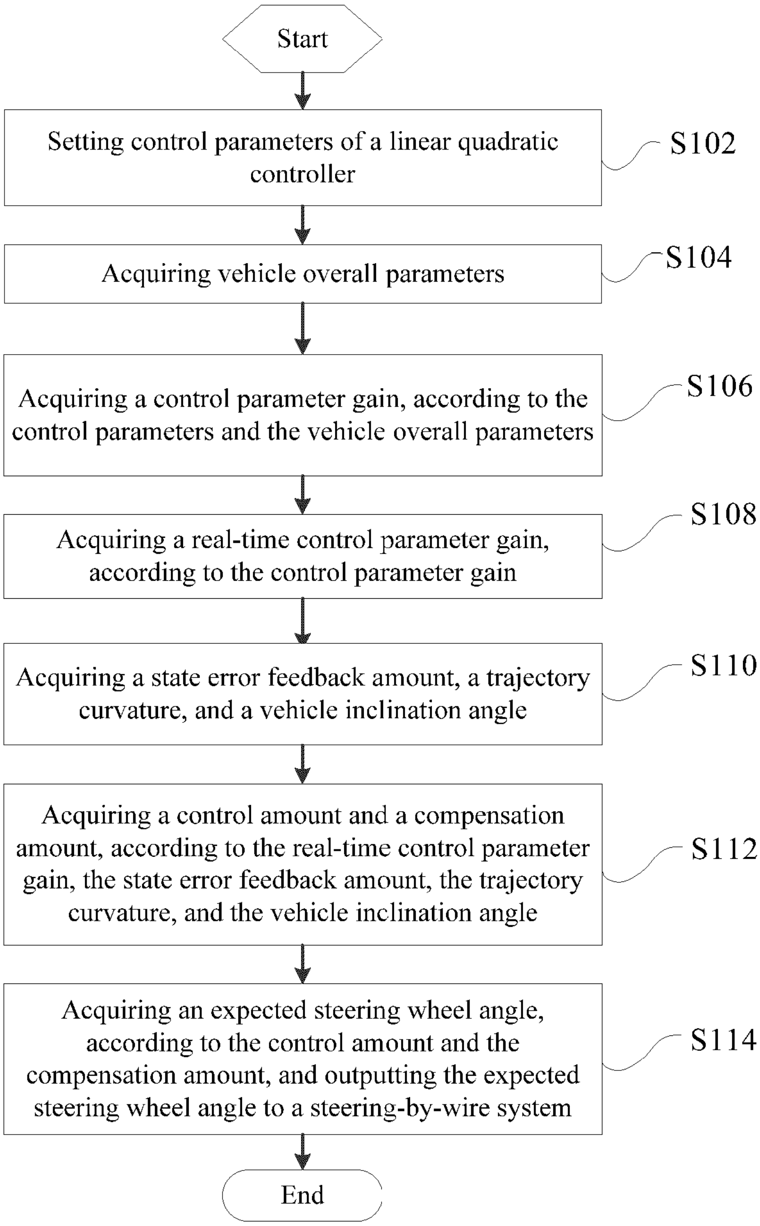
Start
Setting control parameters of a linear quadratic controller
S102
Acquiring vehicle overall parameters
S104
Acquiring a control parameter gain, according to the control parameters and the vehicle overall parameters
S106
Acquiring a real-time control parameter gain, according to the control parameter gain
S108
Acquiring a state error feedback amount, a trajectory curvature, and a vehicle inclination angle
S110
Acquiring a control amount and a compensation amount, according to the real-time control parameter gain, the state error feedback amount, the trajectory curvature, and the vehicle inclination angle
S112
Acquiring an expected steering wheel angle, according to the control amount and the compensation amount, and outputting the expected steering wheel angle to a steering-by-wire system
S114
End

FIG. 2

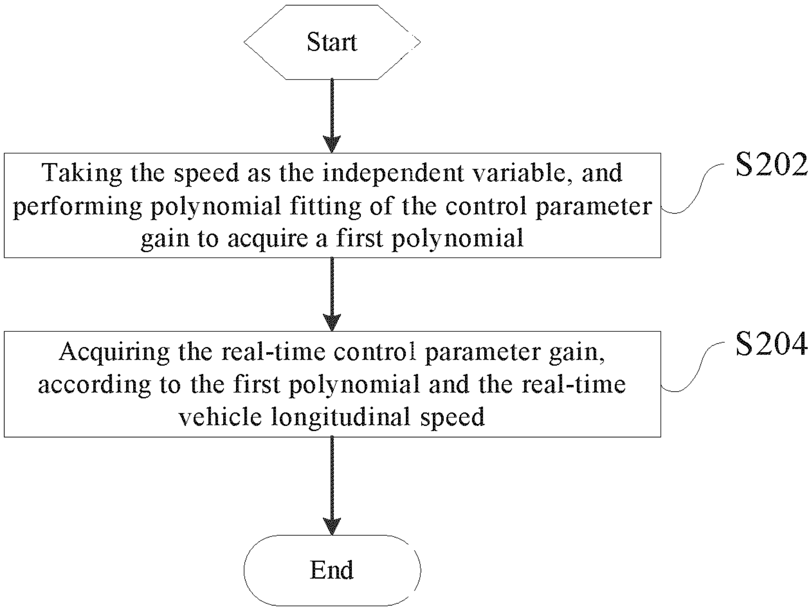
Start
Taking the speed as the independent variable, and performing polynomial fitting of the control parameter gain to acquire a first polynomial
S202
Acquiring the real-time control parameter gain, according to the first polynomial and the real-time vehicle longitudinal speed
S204
End

FIG. 3

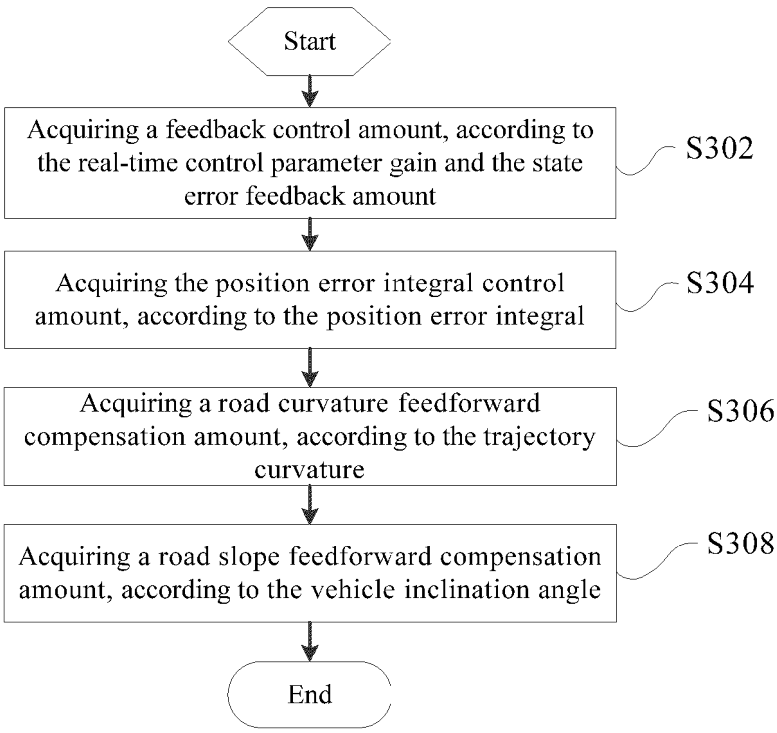
Start
Acquiring a feedback control amount, according to the real-time control parameter gain and the state error feedback amount
S302
Acquiring the position error integral control amount, according to the position error integral
S304
Acquiring a road curvature feedforward compensation amount, according to the trajectory curvature
S306
Acquiring a road slope feedforward compensation amount, according to the vehicle inclination angle
S308
End

FIG. 4

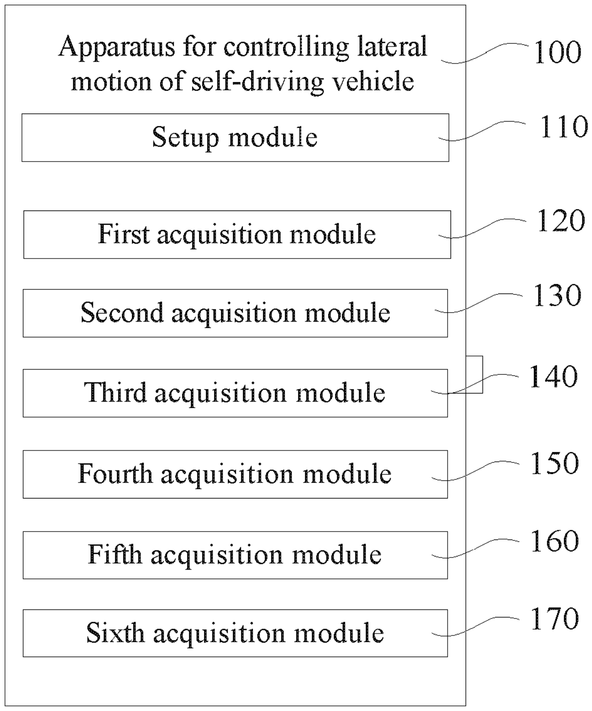


FIG. 5

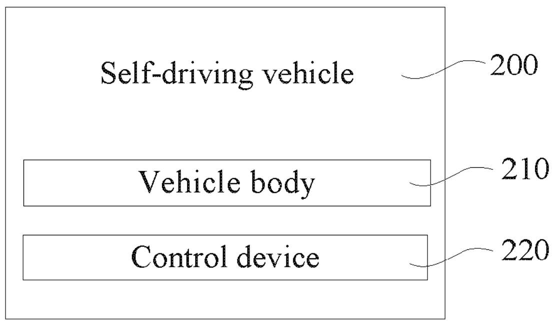


FIG. 6

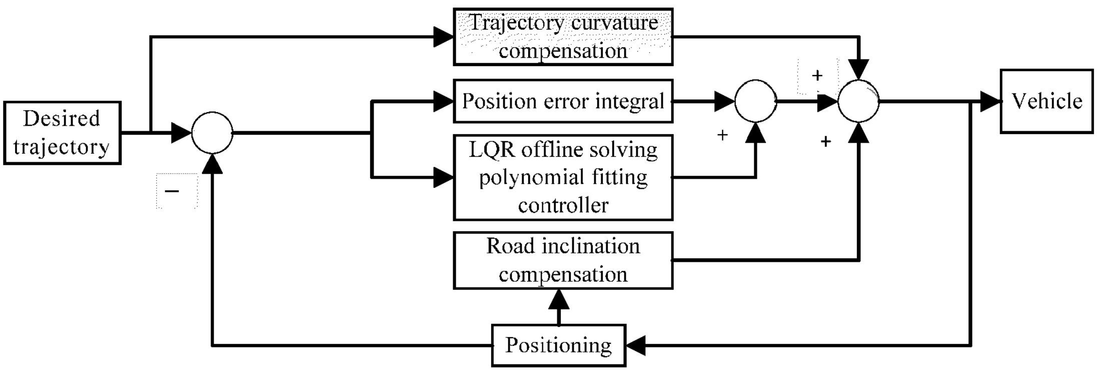


FIG. 7

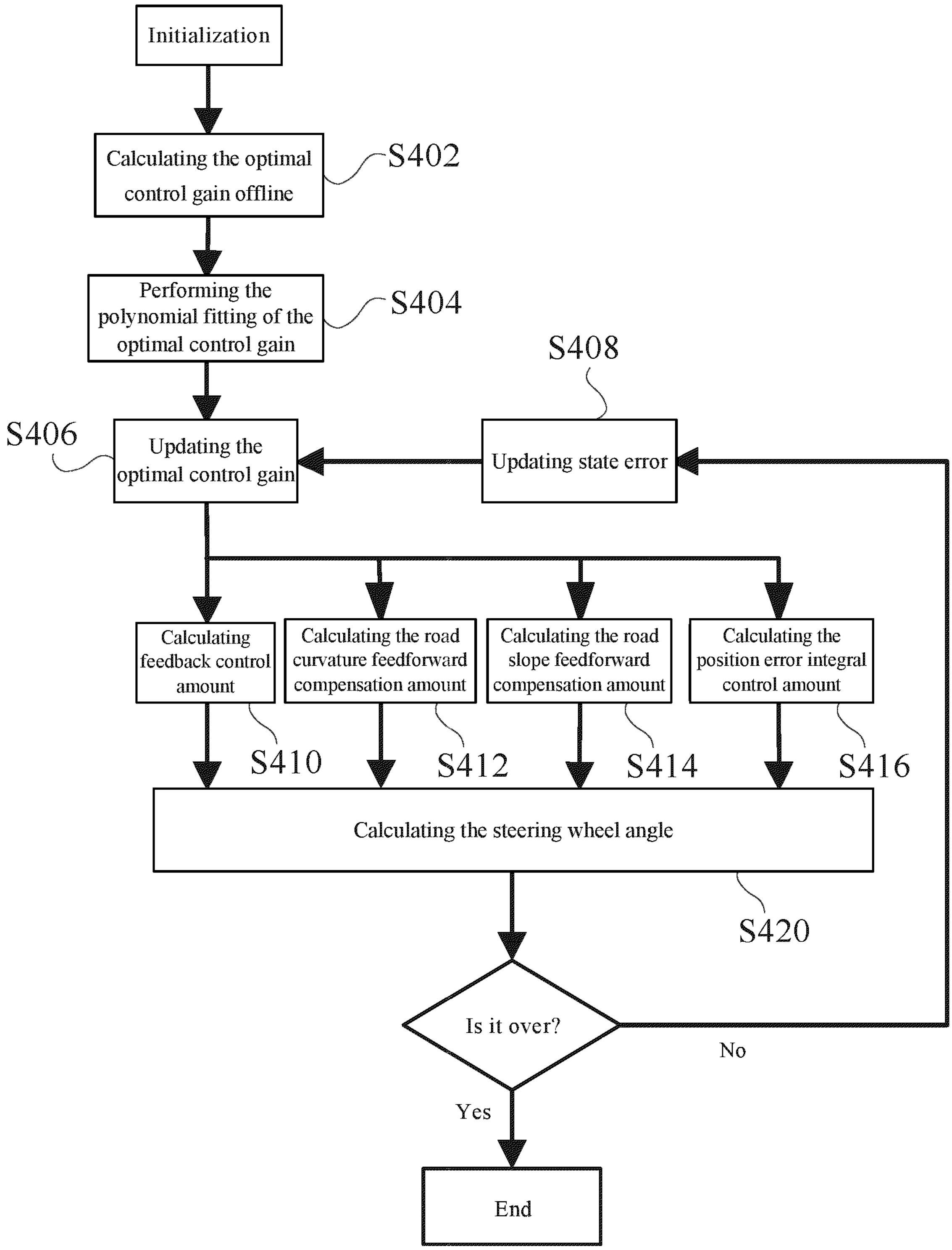
Initialization
Calculating the optimal control gain offline
S402
Performing the polynomial fitting of the optimal control gain
S404
S408
S406
Updating the optimal control gain
Updating state error
Calculating feedback control amount
Calculating the road curvature feedforward compensation amount
Calculating the road slope feedforward compensation amount
Calculating the position error integral control amount
S410
S412
S414
S416
Calculating the steering wheel angle
S420
Is it over?
No
Yes
End

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 110568758 A
- CN 109683614 A